# EUROPEAN PATENT SPECIFICATION

(11) **EP 1 081 574 B1**
(45) Date of publication and mention of the grant of the patent: **19.01.2005**
(21) Application number: 00118234.4
(22) Date of filing: 01.09.2000
(51) Int. Cl.: G06F 1/00

(54) **Copyrighted data processing method and apparatus**
Verfahren und Gerät um urheberrechtlich geschützte Daten zu verarbeiten
Méthode et appareil pour traiter des droits d'auteurs de données

(30) Priority: 01.09.1999 JP 24792199; 01.09.1999 JP 24792099; 01.09.1999 JP 24792499
(43) Date of publication of application: 07.03.2001
(73) Proprietor: MATSUSHITA ELECTRIC INDUSTRIAL CO., LTD., Kadoma-shi, Osaka 571-8501 (JP)
(72) Inventor: Shoda, Yukie, Moriguchi-shi, Osaka (JP); Kozuka, Masayuki, Arcadia, CA 91008 (US); Minami, Masataka, Burbank, CA 91504 (US); Tokuda, Katsumi, Toluca Lake, CA 91604 (US); Yamamoto, Masaya, Katano-shi, Osaka (JP); Otani, Yukako, Moriguchi-shi, Osaka (JP); Inoue, Mitsuhiro, Studio City, CA 91604 (US); Hirata, Noboru, Katano-shi, Osaka (JP)
(74) Representative: Lang, Johannes, Dipl.-Ing.

(56) References cited:
- WO-A-97/14087
- WO-A-97/37316
- US-A- 5 715 403

## Description

### BACKGROUND OF THE INVENTION

### Field of the Invention

The present invention is related to a method and apparatus for processing copyrighted data, and more specifically, to a method and apparatus for processing copyrighted data distributed through a network.

### Description of the Background Art

In recent years, various pieces of information have become widely available, and a large number of digital productions have been distributed with multimedia contents including images and sounds. Such digital productions are provided for users through recording media such as CD-ROMs or communication means such as the Internet. Especially, downloading digital productions to personal computers through a communication network is a convenient distribution method, and therefore this method is expected to wildly spread. Digital productions are easy to copy without deteriorating in characteristic. For this reason, copyright protection for digital productions is highly required.

For protecting copyright for digital productions, the following conventional arts have been known. A first conventional art is a content control method used in a music distribution system, which has been published in "Internet-based music distribution requires immediate improvements in copyright protection technologies", Nikkei Electronics, Issue, no. 738, March, 8, 1999, PP. 87-111. In the content control method, a file containing encrypted music data (hereinafter referred to as file A) and a file containing control information, a decryption key for decrypting the file A, and others (hereinafter referred to as file B) are distributed through a communication network. To play back the music data contained in the file A, it is determined, with reference to the control information contained in the file B, whether or not the file A is allowed to be played back or copied.

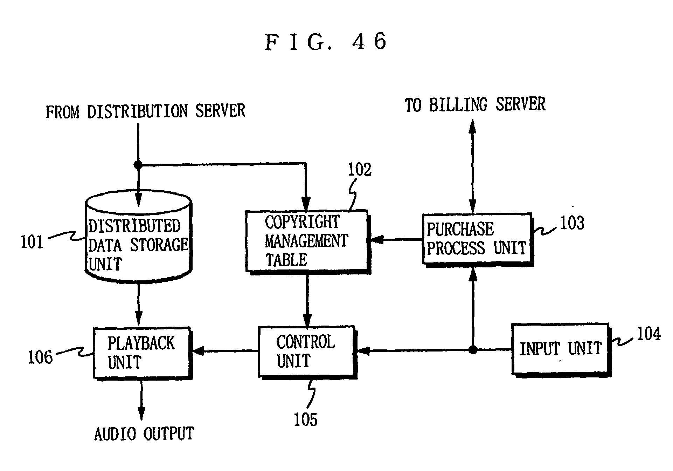

FIG. 46 is a block diagram showing the structure of a data processing apparatus using the first conventional art. The data processing apparatus shown in FIG. 46 is connected to a communication network (not shown) when in use. A distributed data storage unit 101 stores the file A distributed through a communication network such as the Internet and CATV (Cable TV). A copyright management table 102 stores the file B distributed through the communication network corresponding to the file A. A purchase process unit 103 communicates with a billing server (not shown) to purchase a process right required for playback and other processes, and records the purchased process right in the copyright management table 102. When an instruction is inputted by using an input unit 104, a control unit 105 determines, with reference to the process right recorded in the copyright management table 102, whether the instruction is to be executed or not. A playback unit 106 receives a decryption key contained in the file B from the control unit 105, and plays back the music data contained in the file A.

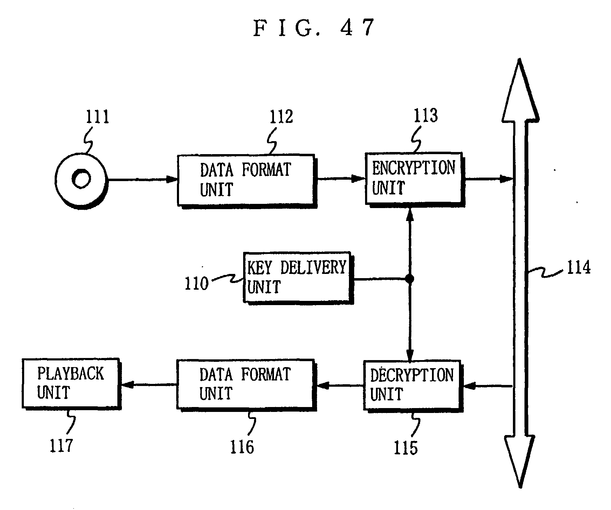

As a second conventional art, a method of preventing unauthorized copy by encrypting digital data has been known, which is disclosed in Japanese Patent Laid-Open Publication No. 9-320192 (1997-320192). FIG. 47 is a diagram showing the structure of a copyright protection apparatus according to the second conventional art. The copyright protection apparatus shown in FIG. 47 is characterized in that digital data read from a disk 111 is encrypted before being placed on a bus 114. In other words, a data format unit 112 provides the data read from the disk 111 with encryption start information, an encryption key, information about a unit of encryption, copy management information indicating whether data copy is allowed or not, and identification information of an encryption algorithm to be used. An encryption unit 113 encrypts the data using the encryption key provided by a key delivery unit 110. The encrypted data flows on the bus 114. A decryption unit 115 decrypts the data using a decryption key provided by the key delivery unit 110. The decrypted data is restored by a data format unit 116 to the state as it was read from the disk 111, and then played back by a playback unit 117.

As such, according to the first conventional art, received copyrighted data can be processed within a purchased process right, while, according to the second one, copyrighted data can be protected from unauthorized copy.

In these conventional arts, however, details on how to handle received copyrighted data are not disclosed. Especially, a format in which data processing apparatus handles copyrighted data is not disclosed.

In a music distribution system, for example, a data processing apparatus for processing music data receives music data through a communication network, and copies the received music data to an external storage medium. The data processing apparatus is provided with music data from many providers. Since the copyright of the music data belongs to each providers, the music data is distributed with a format unique to each provider. Also, the music data can be copied to various types of external storage media such as DVD-RAMs and memory cards. Therefore, when being copied to the external storage medium, the distributed music data has to be converted into a format specified for each type of external storage medium.

Under circumstances where many providers and many types of external storage media are present as described above, distributed copyrighted data cannot be efficiently processed with the above background arts because these arts do not disclose the format in which copyrighted data is handled.

The disclosure WO-A-9714087 discloses a system for distribution of Digital Creative Works such as copyrighted electronic media which are packaged in a secure electronic format, or CONTAINER, and registered on associated registration server. The registration server serves to provide on-line licensing and copyright management for that Work. Users are connected to the registration server through a computer network or the Internet to enable data transfers and to transact licenses to utilize the media. Packaged electronic media are typically created by an author or derivative user of the work. Once the packaged media is registered on the server, the media is made available for limited use and possible license through an authorization server. This limited use is specified within the minimum permissions data set assigned to each packaged media. Without a license, users are typically permitted to view the packaged media - through a system which unpackages the media - but cannot save, print or otherwise transfer the media without obtaining auxiliary permissions to do so from the authorization server. The electronic media is authenticated through digital signatures and optional encryption.

### SUMMARY OF THE INVENTION

Therefore, an object of the present invention is to provide a copyrighted data processing apparatus for efficiently processing copyrighted data by converting the copyrighted data distributed through a communication network into an internal format suitable for the following process.

The present invention has the following features to achieve the object above.

A first aspect of the present invention is directed to a data processing apparatus executing a process on copyrighted data within a right obtained, comprising: a data receiving unit operable to receive distribution-format data including at least content data for protection and billing information defining a billing condition on the content data; a right purchasing unit operable to carry out payment based on the billing information and obtain a process right required for the process on the content data; a right information storage unit operable to store the process right obtained by the right purchasing unit; a data conversion unit operable to convert the distribution-format data including the content data into internal-format data without the billing information when the process right is obtained for the content data; a data storage unit operable to store the internal-format data obtained by the data conversion unit; and a process execution unit operable to execute the process on the internal-format data stored in the data storage unit within the process right stored in the right information storage unit.

With such data processing apparatus, the copyrighted data is converted into internal-format data without the billing information, and then stored. Therefore, the data can be processed variously under copyright management through a uniform procedure, irrespective of the billing method.

Further, when the content data may be encrypted, and the billing information includes a decryption key for decrypting encryption of the content data, the decryption key may be extracted from the billing information by the data conversion unit, and stored in a right information storage unit. A process execution unit may decrypt the encryption of the content data using the decryption key. In this way, the decryption key is managed with the right information storage unit, thereby enabling data decryption through a uniform procedure, irrespective of the method of distributing the decryption key.

Still further, the distribution-format data may include the content data, the billing information, a header, and process execution control information to control process execution for the content data. The data processing apparatus for processing such data can control execution of the data process as intended by the content data creator with the use of the process execution control information.

Still further, the internal-format data may be equal to data obtained by separating only the billing information from the distribution-format data. With this, the process in the data conversion unit becomes easy, and the processing speed of the data processing apparatus can be improved.

According to a second aspect of the present invention in regard to the first aspect, the process execution unit comprises a data copy unit operable to copy the internal-format data stored in the data storage unit to a removable storage medium, and the data conversion unit converts the distribution-format data into the internal-format data based on a type of the storage medium. More preferably, the data processing apparatus may further comprise a storage medium detection unit operable to detect the type of the storage medium or a storage medium specifying unit operable to specify the type of the storage medium, and the data conversion unit may convert the distribution-format data into the internal-format data based on the type of the storage medium detected or specified by these units.

In such data processing apparatus, the copyrighted data is converted into the internal-format data suitable for the type of the storage medium, and then stored. Therefore, an amount of data in the data processing apparatus can be reduced.

Still further, if the distribution-format data includes one or more pieces of the content data, the internal-format data may include only content data to be copied to the storage medium among the one or more pieces of the content data. By selecting and storing only required content data, the amount of data can be greatly reduced.

A third aspect of the present invention is directed to a data processing method for executing a process on copyrighted data within a right obtained, comprising: a data receiving step of receiving distribution-format data including at least content data for protection and billing information defining a billing condition on the content data; a right purchasing step of processing purchasing based on the billing information and obtaining a process right required for the process on the content data; a right information storing step of storing the process right obtained in the right purchasing step; a data converting step of converting the distribution-format data including the content data into internal-format data without the billing information when the process right is obtained for the content data; a data storing step of storing the internal-format data obtained in the data converting step; and a process executing step of executing the process on the internal-format data stored in the data storing step within the process right stored in the right information storing step.

A fourth aspect of the present invention is directed to a recording medium recording a program for executing, on a computer, the data processing method of the third aspect of the present invention.

According to the third or fourth aspect of the invention, the copyrighted data is converted into the internal-format data without the billing information, and then stored. Therefore, the data can be processed variously under copyright management through a uniform procedure, irrespective of the billing method.

As stated above, the copyrighted data processing method and apparatus according to the present invention provide the user with excellent usability, which is quite effective in practical use.

These and other objects, features, aspects, and advantages of the present invention will become more apparent from the following detailed description of the present invention when taken in conjunction with the accompanying drawings.

### BRIEF DESCRIPTION OF THE DRAWINGS

FIG. 1 is a block diagram showing the structure of a data processing apparatus according to a first embodiment of the present invention;
FIG. 2 is a diagram showing the structure of a music distribution system using the data processing apparatus according to the first embodiment;
FIGS. 3a to 3c are diagrams showing formats of music data to be handled by the data processing apparatus according to the first embodiment;
FIG. 4 shows an example of a purchase management table in the data processing apparatus according to the first embodiment;
FIG. 5 shows an example of a copyright management table in the data processing apparatus according to the first embodiment;
FIG. 6 is a flowchart showing the operation of a control unit in the data processing apparatus according to the first embodiment;
FIG. 7 is a flowchart showing the operation of a purchase process unit in the data processing apparatus according to the first embodiment;
FIG. 8 is another diagram showing the music distribution system using the data processing apparatus according to the first embodiment;
FIG. 9 is a block diagram showing the structure of a data processing apparatus according to a second embodiment of the present invention;
FIG. 10 is a flowchart showing the operation of a data conversion unit in the data processing apparatus according to the second embodiment;
FIG. 11 is a flowchart showing the detailed operation of the data conversion unit in the data processing apparatus according to the second embodiment;
FIG. 12 is an example of a package management table in the data processing apparatus according to the second embodiment;
FIGS. 13a to 13c are diagrams showing the effect of data conversion process in the data processing apparatus according to the second embodiment;
FIG. 14 is a diagram showing another format of music data handled by the data processing apparatus according to the second embodiment;
FIG. 15 is a block diagram showing the structure of a data processing apparatus according to a third embodiment of the present invention;
FIG. 16 is a diagram showing a screen for specifying an external storage medium by the data processing apparatus according to the third embodiment;
FIG. 17 is a flowchart showing the operation of a data conversion unit in the data processing apparatus according to the third embodiment;
FIG. 18 is a diagram showing the structure of an SDAF package according to a fourth embodiment of the present invention;
FIGS. 19a to 19c are diagrams showing other structures of the SDAF packages;
FIG. 20 is a diagram showing how to split an SDAF title into SDAF packages;
FIG. 21 is a diagram showing an example of the SDAF package;
FIG. 22 is a diagram showing a header structure;
FIGS. 23 and 24 show source codes describing the header structure using the C++ language;
FIGS. 25a to 25c are diagrams showing how to define a CEL attribute table using a tag structure;
FIG. 26 is a diagram showing a correspondence between key pairs and CELs;
FIG. 27 shows source codes describing the key pair structure using the C++ language;
FIG. 28 is a diagram showing how to refer to the CEL from navigation data;
FIGS. 29 and 30 are diagrams showing the structure of the navigation data;
FIG. 31 is a table showing specifications of MPEG2-AAC applied to audio CEL;
FIG. 32 is a table showing specifications of JPEG applied to an image CEL;
FIG. 33 is a table showing specifications of MPEG-I frame applied to the image CEL:
FIG. 34 is a table showing specifications of PNG applied to the image CEL;
FIG. 35 is a table showing specifications of MPEG2 applied to a video CEL;
FIG. 36 is a diagram showing the structure of a time search map;
FIGS. 37, 38a, and 38b are a table and diagrams showing a header included in the time search map in detail;
FIG. 39 is a table showing each entry included in the time search map in detail;
FIG. 40 is a table showing an example of CEL redirectors;
FIGS. 41a to 41c are diagrams showing examples of how to distribute the SDAF package;
FIGS. 42a to 42c are diagrams showing examples of how to create the SDAF package;
FIG. 43 is an external view of a portable music player;
FIGS. 44 and 45 are block diagrams showing the structure of the data conversion unit;
FIG. 46 is a block diagram showing the structure of a conventional data processing apparatus; and
FIG. 47 is a block diagram showing the structure of a conventional copyright protection apparatus.

### DESCRIPTION OF THE PREFERRED EMBODIMENTS

With reference to the drawings, embodiments of the present invention are described below. First, as first to third embodiments, data conversion apparatuses for converting distributed copyrighted data into a predetermined internal format are described. Thereafter, as a fourth embodiment, a specific example of the copyrighted data according to the first to third embodiments are described in detail.

Note that the copyrighted data according to the fourth embodiment is merely an example of that according to the first to third embodiments, and it goes without saying that the data processing apparatuses according to the first to third embodiments may handle other copyrighted data. Moreover, although description will be made herein assuming that copyrighted data is music data, the copyrighted data in the present invention is not restricted to the music data, but may also be image data, text data, or combination of both and music data .

### (First Embodiment)

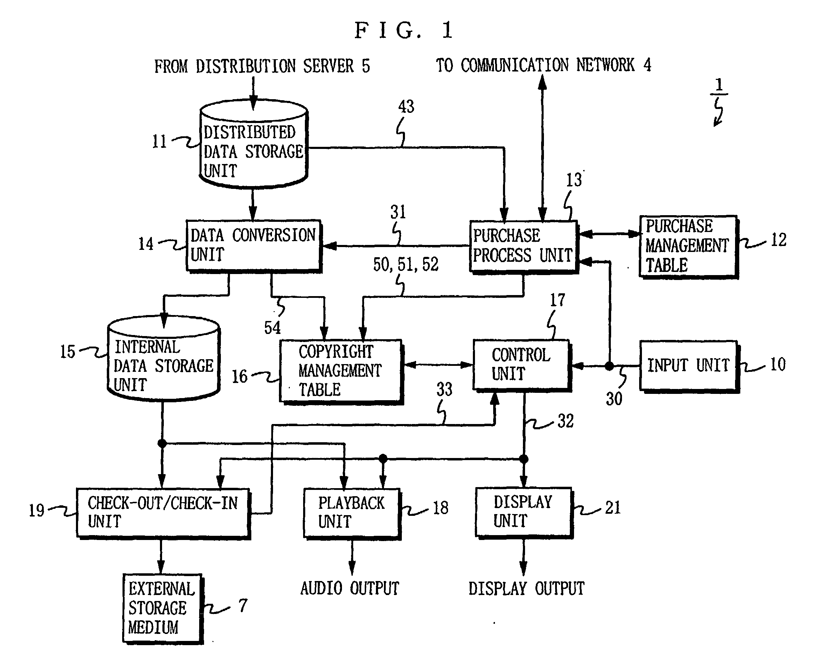

FIG. 1 is a block diagram showing the structure of the data processing apparatus according to the first embodiment of the present invention. The data processing apparatus 1 shown in FIG. 1 includes an input unit 10, a distributed data storage unit 11, a purchase management table 12, a purchase process unit 13, a data conversion unit 14, an internal data storage unit 15, a copyright management table 16, a control unit 17, a playback unit 18, a check-out/check-in unit 19, and a display unit 21. The data processing apparatus 1 carries out playback, copy, and other processes on distributed copyrighted music data, and is characterized in that the distributed music data is converted into an internal format for storage.

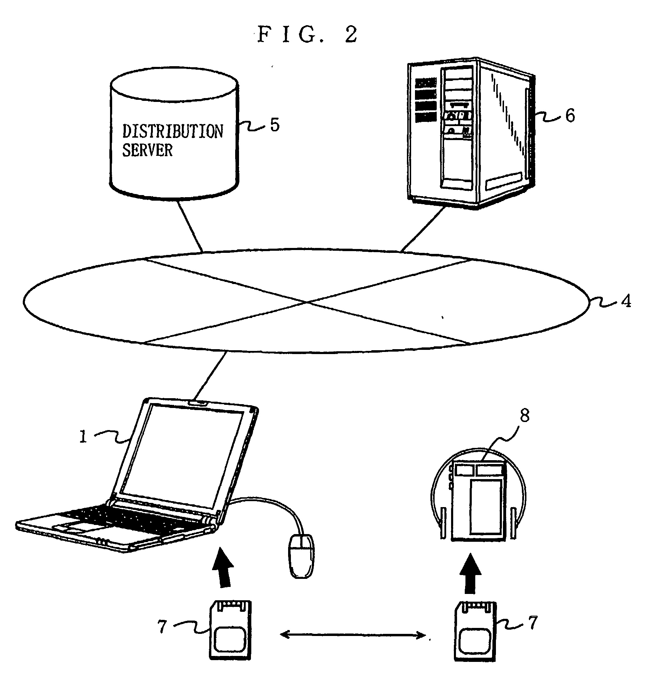

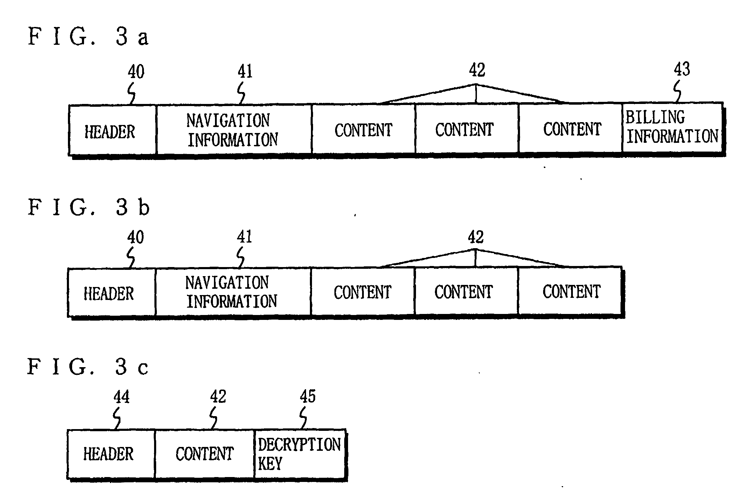

Prior to detailed description of the data processing apparatus 1, music distribution system using the data processing apparatus 1 and formats of music data handled in the data processing apparatus 1 are now described with reference to FIGS. 2 and 3.

As shown in FIG. 2, the data processing apparatus 1 is connected through a communication network 4 to a distribution server 5 and a billing server 6. The communication network 4 is a network such as the Internet, or a network for CATV, satellite communications, or cellular phones. The distribution server 5 stores a large amount of copyrighted music data. In response to a request from the data processing apparatus 1, the distribution server 5 distributes the music data. The billing server 6 carries out a billing process for the distributed music data. External storage media 7 are structured removable from both the data processing apparatus 1 and a portable music player 8. The data processing apparatus 1 identifies each external storage medium 7 by using a storage medium identifier unique to each medium 7 or a label name specified by the user for each medium 7.

Copyright management for music data is now briefly described below. The distribution server 5 distributes encrypted music data and decryption keys for decryption to the data processing apparatus 1. The data processing apparatus 1 transmits information that the user agrees to pay for the music data to the billing server 6 before or after distribution in order to purchase a process right to the distributed music data. For example, the data processing apparatus 1 plays back the music data using the decryption keys as many times as the number of playbacks specified by the purchased right.

Moreover, the data processing apparatus 1 can copy the music data and decryption keys to the external recording medium 7 (such processing hereinafter referred to as check-out) and delete the copied music data from the external recording medium 7 (such processing hereinafter referred to as check-in). The data processing apparatus 1 can check out the music data as many times as the number of check-outs specified by the purchased right. A check-out right that allows check-out once is recovered when the checked-out data is checked in. However, the music data can be checked in only by the data apparatus that has checked out the music data. Moreover, if the external storage medium to which edit-protected music data is checked out is written upon, the data processing apparatus 1 does not check in the music data.

The music data handled by the data processing apparatus 1 includes, in addition to audio contents, contents such as video, images, text, and programs. FIGS. 3a to 3c are diagrams showing three music data formats handled by the data processing apparatus 1. A distribution format shown in FIG. 3a is used for distributing the music data. An internal format shown in FIG. 3b is used for storing the music data in the data processing apparatus 1. A copy format shown in FIG. 3c is used for checking out the music data to the external storage medium 7.

The music data is distributed to the data processing apparatus 1 by a unit called package. In the distribution format shown in FIG. 3a, the package is composed of four data items: a header 40, navigation information 41, one or more contents 42, and billing information 43. The header 40 includes information such as a package identifier for identifying the package and information about the position and size of other data. The content 42 is content data such as audio, video, images, text, or programs. Each content has its own content identifier that is unique within the package, and is encrypted as required.

The navigation information 41 is used as playback control information used for controlling music data playback. For referring to each content 42 from the navigation information 41, the content identifier is used. A content included in the package to which the navigation information belong is referred to only with its content identifier, while a content in another package is referred to with its package identifier and content identifier. The billing information 43 includes a use condition, price, and decryption key for each content 42.

In the data processing apparatus 1, the music data is handled with the billing information 43 separated therefrom. In the internal format shown in FIG. 3b, the music data is composed of the header 40, the navigation information 41, and the contents 42.

The music data is converted into a format appropriate to the type of the external recording medium 7 before being checked out thereto. For example, if the external storage medium 7 is an SD (Secure Digital) memory card, the music data is converted into a format so that audio contents for the SD memory card are included and video contents are not included therein. In the copy format shown in FIG. 3c, the music data is composed of a header 44, the content 42, and the decryption key 45. The header 44 conforms to the type of the external storage medium 7. The decryption key 45 is extracted from the billing information 43 in the distribution format. The content 42 is content data selected based on the type of the external storage medium 7 from the music data in the internal format. The music data shown in FIG. 3c includes only a single content 42, but may include one or more contents. When the music data is checked out, the music data in the copy format may be split into a plurality of files for copy.

Referring back to FIG. 1, the structure of the data processing apparatus 1 is described below. The operation of the data processing apparatus 1 is now briefly described. The distributed music data is converted into an internal format by the data conversion unit 14, and then stored in the internal data storage unit 15. Information about the right to process each content included in the music data is recorded in the copyright management table 16. The control unit 17 refers to the copyright management table 16 to determine whether an inputted instruction 30 is to be executed or not. If determining that the instruction is to be executed, the control unit 17 makes an instruction for starting playback, check-out, and other process.

The user inputs the instruction 30 for the content with the input unit 10. The instructions described in the present embodiment are those for distribution, purchasing, playback, check-out, and check-in. In addition, other examples include, move, mode setting, instructions for data classification, data editing, data search, import, export, adding user data, taking in ripped contents, and authorization check.

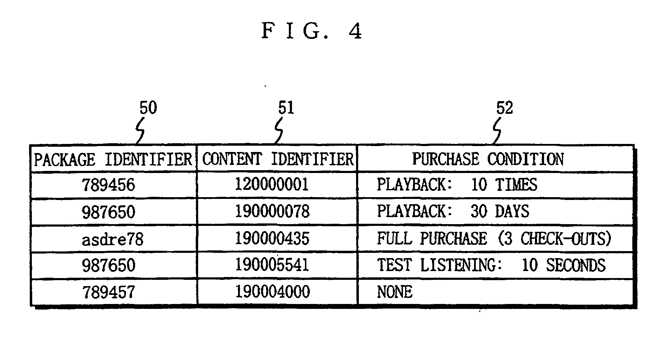

The distributed data storage unit 11 stores music data in a distribution format distributed by the distribution server 5. The purchase management table 12 stores, as shown in FIG. 4, a package identifier 50, a content identifier 51, and a purchase condition 52 as a set for each content included in the music data stored in the distributed data storage unit 11. The purchase condition is specified at the purchase of the content. For example, such condition includes playback only, full purchase, and test-listening. If the purchase condition is playback only, the content can be played back only a specified number of times or only in a specified period. If the purchase condition is full purchase, the content can be freely played back and checked out only a specified number of times. If the purchase condition is test-listening, the content can be played back an unlimited number of times within a specified time period.

When receiving from the input unit 10 the instruction 30 for purchasing, the purchase process unit 13 sends information that the user agrees to pay the music data to the billing server 6 to purchase a right to the distributed music data. Thereafter, the purchase processing unit 13 records the purchased process right in the purchase management table 12. If the specified content is not stored in the distributed data storage unit 11, the purchase process unit 13 requests the distribution server 5 to distribute the music data containing the content. After receiving the music data, the purchase processing unit 13 provides the data conversion unit 14 with a control signal 31 for instructing data conversion.

Receiving the control signal 31, the data conversion unit 14 converts the specified music data into the internal format. In other words, the data conversion unit 14 separates the billing information 43 from the distributed package to obtain the music data in the internal format. The data conversion unit 14 also extracts the decryption key 54 for each content from the billing information 43, and records the decryption key in the copyright management table 16.

The internal data storage unit 15 stores the music data in the internal format outputted from the data conversion unit 14. The stored music data is to be played back, checked out, etc.

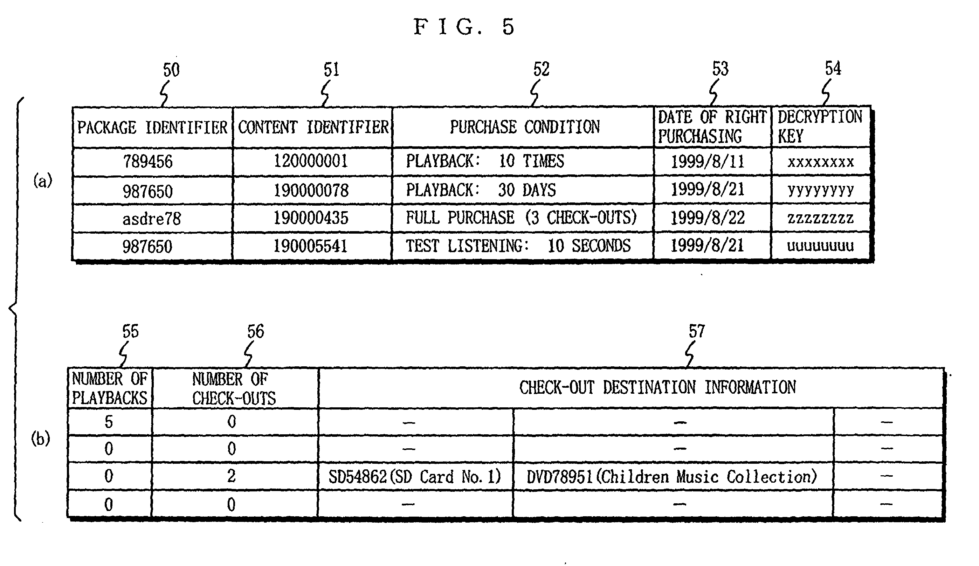

The copyright management table 16 stores, as shown in FIG. 5, copyright management information for each content stored in the internal data storage unit 15. The copyright management table 16 includes the package identifier 50, the content identifier 51, the purchase condition 52, date of right purchasing 53, a decryption key 54, the number of playbacks 55, the number of check-outs 56, and check-out destination information 57. Note that FIG. 5 shows a single table divided into two parts indicated by (a) and (b), and in the table before being divided, the number of playbacks 55 follows the decryption key 54.

The package identifier 50, the content identifier 51, and the purchase condition 52 are the same data as that stored in the purchase management table 12. The date of right purchasing 53 indicates the date of purchasing the content. The decryption key 54 is used to decrypt encryption of the content. The number of playbacks 55 indicates the number of times the content has been played back. The number of check-outs 56 indicates the number of times the content has been checked out. The check-out destination information 57 includes a storage medium identifier and a label name for the external storage medium to which the content has been checked out. The label name is assigned to the external storage medium when the music data is first checked out thereto.

The package identifier 50, the content identifier 51, the purchase condition 52, the date of right purchasing 53, and the decryption key 54 are set to predetermined values when new music data is stored in the internal data storage unit 15. The package identifier 50, the content identifier 51, and the purchase condition 52 are set to values provided by the purchase process unit 13, while the decryption key 54 is set to a value provided by the data conversion unit 14. The number of playbacks 55 and the number of check-outs 56 are initialized to 0, while the check-out destination information 57 is cleared. The copyright management table 16 is encrypted with an encryption method unique to the data processing apparatus 1 for protection against data tampering.

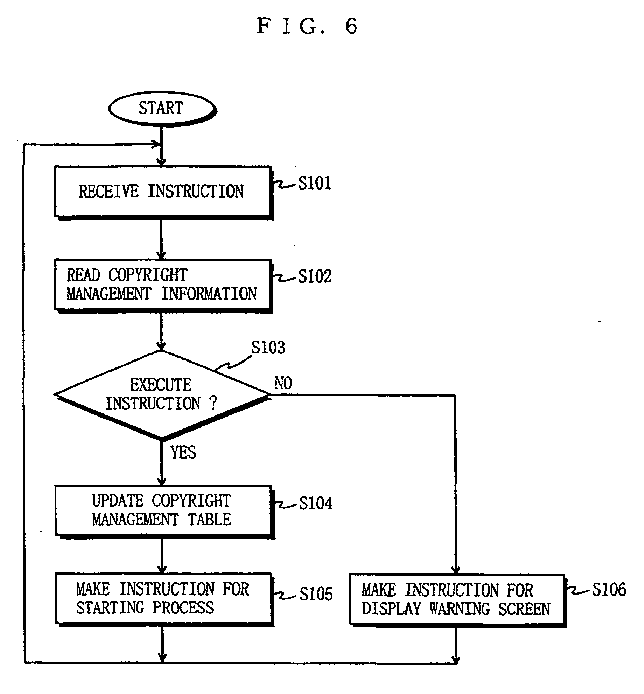

The control unit 17 refers to the copyright management table 16 to determine whether the instruction 30 is to be executed or not. When determining that the instruction 30 is to be executed, the control unit 17 makes an instruction for starting playback or check-out. With reference to a flowchart shown in FIG. 6, the operation of the control unit 17 is now described. When receiving the instruction 30 for the content (step S101), the control unit 17 reads the copyright management information of that content from the copyright management table (step S102). The control unit 17 then uses the read copyright management information to determine whether the instruction 30 is to be executed or not (step S103). For example, when receiving a playback instruction, the control unit 17 refers to the number of allowable playback or the allowable playback period included in the purchase condition 52. If the number of playbacks is not more than the number of allowable playbacks or if today is within the allowable playback period after the date of right purchasing 53, the control unit 17 determines that the playback instruction is to be executed.

When determining that the instruction is to be executed, the control unit 17 updates the number of playbacks 55, the number of check-outs 56, or other relevant items included in the copyright management table 16 (step S104). The control unit 17 then outputs a control signal 32 for starting the process to a relevant process execution unit (step S105). At this time, the control unit 17 also outputs the decryption key 54 read from the copyright management table 16 as being included in the control signal 32. On the other hand, when determining that the instruction is not to be executed, the control unit 17 outputs the control signal 32 for warning display to the display unit 21 (step S106).

When receiving the control signal 32 for starting playback, the playback unit 18 reads the specified content from the music data stored in the internal data storage unit 15, and plays back the content using the received decryption key 54.

When receiving the control signal 32 for starting check-out, the check-out/check-in process unit 19 reads the specified content from the music data stored in the internal data storage unit 15, converts it to the copy format, and writes the converted music data in the external storage medium 7. When receiving the control signal 32 for starting check-in, the check-out/check-in unit 19 deletes the music data copied to the external storage medium 7.

The check-out/check-in unit 19 also reads the storage medium identifier 33 from the external storage medium 7, and outputs it to the control unit 17. The control unit 17 records the received storage medium identifier 33 in the copyright management table 16 after check-out. The control unit 17 also determines before check-in whether check-in can be performed or not, depending on whether the received storage medium identifier 33 has been recorded in the copyright management table 16 or not.

When receiving the control signal 32 for warning display, the display unit 21 generates a warning screen, and displays the screen on a CRT or a liquid crystal display.

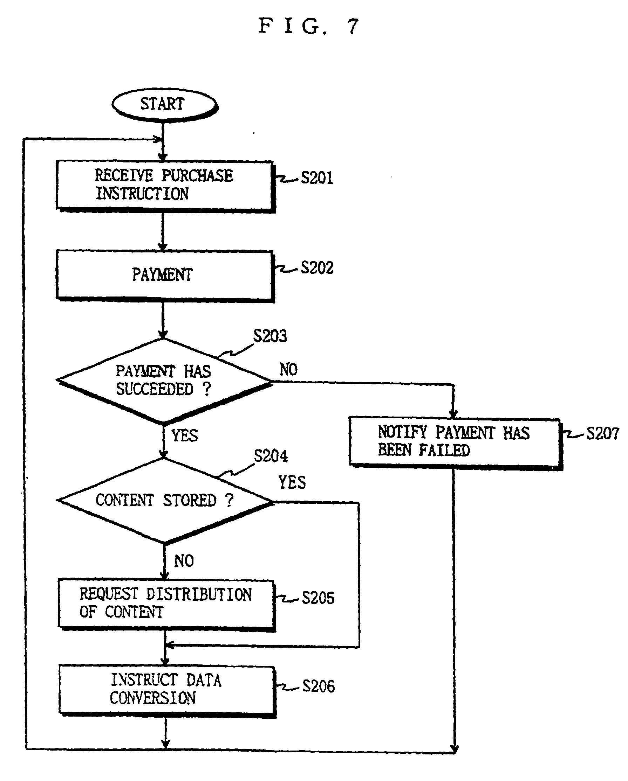

The data conversion process that characterizes the data processing apparatus 1 is now described below. With reference to a flowchart shown in FIG. 7, the operation of the purchase process unit 13 is first described to clarify a condition for data conversion.

The purchase process unit 13 first receives, from the input unit 10, the instruction 30 for purchasing the content (step S201). The instruction 30 for purchasing specifies the content identifier of the content to be purchased and its purchase condition. The purchase condition of the content is equal to the purchase condition 52 shown in FIG. 4, including playback only, full purchase, test-listening, and others. Then, the purchase process unit 13 communicates with the billing server 6 to carry out payment for purchasing the specified content under the specified purchase condition (step S202). The purchase process unit 13 carries out payment by referring to the billing information 43 for the specified content. The purchase process unit 13 then determines whether the purchase process has succeeded or not (step S203). For example, in step S202, the purchase process unit 13 sends, to the billing server 6, information that the user agrees to pay for the specified content under the specified purchase condition. Then, in step S203, by receiving the information from the billing server 6 for confirming payment, the purchase process unit 13 determines whether payment has succeeded or not. Note that the manner of payment carried out by the purchase process unit 13 is not limited to the above.

If the purchase process has succeeded, the purchase process unit 13 further determines whether the specified content is stored in the distributed data storage unit 11 or not (step S204). If the content is not stored, the purchase process unit 13 requests the distribution server 5 to distribute the music data including the content (step S205). After the specified content is stored in the distributed data storage unit 11, the purchase process unit 13 outputs the control signal 31 for data conversion to the data conversion unit 14 (step S206). The data conversion unit 14 converts the music data in the distribution format stored in the distributed data storage unit 11 into the internal format. The converted music data is stored in the internal data storage unit 15.

If the purchase process has failed in step S203, the purchase process unit 13 outputs a control signal (not shown) for notifying that the purchase process has failed to the display unit 21 (step S207). Receiving this control signal, the display unit 21 displays a warning screen indicating that the purchase process has failed. Note that the purchase process fails when the specified content is not found or cannot be purchased under the specified purchase condition, or the amount of payment is insufficient, for example.

As stated above, data conversion is made in the data processing apparatus when the purchase process has succeeded, that is, when the specified content has been purchased under the specified purchase condition.

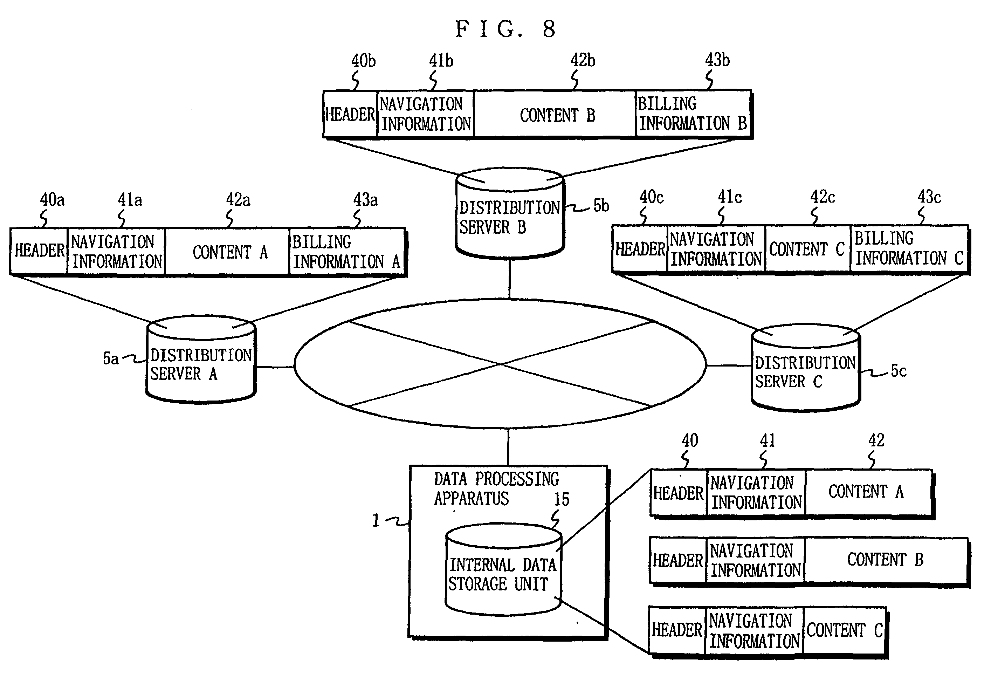

Next, the effect of the data processing apparatus 1 according to the present embodiment is now described. FIG. 8 is a diagram showing how the music data is distributed from a plurality of providers to the data processing apparatus. The distributed music data each includes one or more contents 42 and billing information 43, and has a format unique to each provider. Of the distributed music data items, the navigation information 41 and the content 42 cannot be dispensed with for playback or other processes. On the other hand, the billing information 43 is required only for the purchase process, but not for playback or others.

For this reason, the distribution-format music data is converted into the internal-format music data by separating the billing information 43 from the distribution-format music data, thereby enabling the following processes to be carried out through a uniform procedure, irrespective of the billing method of the music data.

Further, the decryption key 54 for decrypting the encrypted content 42 is extracted from the billing information 43, and then stored in the copyright management table 16. In this way, total management of the decryption key 54 enables music data decryption with a uniform procedure, irrespective of the distribution method of the decryption key.

Still further, the internal format is identical to the distribution format without the billing information 43. Therefore, data conversion can be made without decryption of encrypted data and then encryption thereof. This makes the process in the data conversion unit 14 simple, and the processing speed of the data processing apparatus becomes improved.

Still further, the billing information is separated from the music data in the distribution format after the data conversion. Therefore, the amount of data in the data processing apparatus 1 can be reduced for the billing information 43. This method is quite effective if the billing information 43 is large in size for a complicated billing process.

In the present embodiment, the copyright information of the music data is stored in the copyright management table 16. Alternatively, each row in the copyright management table 16 shown in FIG. 5 may be added to each package, thereby allowing copyright management by package. Moreover, of the items included in the copyright management table 16, the number of playbacks 55, the number of check-outs 56, and the check-out destination information 57 may be managed together in a separate table. In this way, the items that are set only once and the items that are updated every time data conversion is performed may be separately managed using different tables, thereby improving data security.

Furthermore, in the present embodiment, the distribution-format music data and the internal-format music data are separately stored in different data storage units. Alternatively, the music data of these two types may be stored in a single data storage unit.

### (Second Embodiment)

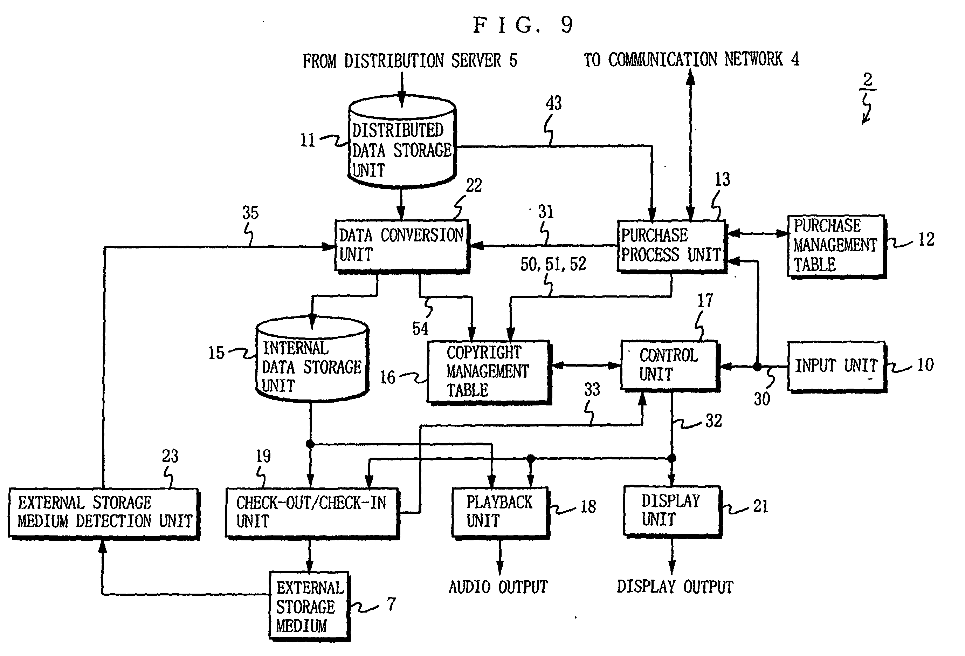

FIG. 9 is a block diagram showing the structure of a data processing apparatus 2 according to the second embodiment of the present invention. The data processing apparatus 2 shown in FIG. 9 includes the input unit 10, the distributed data storage unit 11, the purchase management table 12, the purchase process unit 13, a data conversion unit 22, the internal data storage unit 15, the copyright management table 16, the control unit 17, the playback unit 18, the check-out/check-in unit 19, the display unit 21, and an external storage medium detection unit 23. The data processing apparatus 2 is used in the same music distribution system as that for the data processing apparatus 1 according to the first embodiment. The data processing apparatus 2 is characterized by converting distributed music data into an internal format based on the type of the detected external storage medium. The components in the second embodiment identical to those in the first embodiment are provided with the same reference numerals, and their description is omitted herein.

The external storage medium 7 of various types such as DVD-RAM and a memory card can be connected to the data processing apparatus 2. Therefore, for check-out, the music data is required to be converted into a copy format specified for each type of the external storage medium. In expectation of later conversion to a copy format, the data processing apparatus 2 converts music data in the distribution format into the one in the internal format based on the type of the external storage medium 7.

The external storage medium detection unit 23 detects the type of the external storage medium 7, and outputs a detection signal 35 indicating the detected type to the data conversion unit 22. Based on the detection signal 35, the data conversion unit 22 converts the music data stored in the distributed data storage unit 11 into the internal format predetermined for each type of the external storage medium 7.

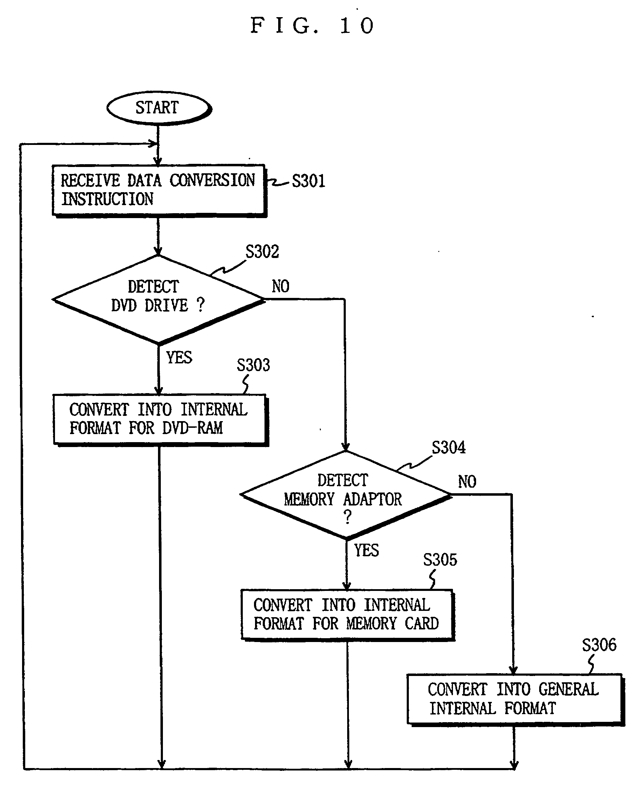

FIG. 10 is a flowchart showing the operation of the data conversion unit 22. When receiving the control signal indicating data conversion (step S301), the data conversion unit 22 carries out the following processes (steps S302 to S306) on the music data stored in the distributed data storage unit 11 based on the detection signal 35.

When receiving the detection signal 35 indicating that a DVD drive is connected (step S302), the data conversion unit 22 converts the music data into an internal format for DVD-RAM (step S303). When receiving the detection signal 35 indicating that a memory adaptor is connected (step S304), the data conversion unit 22 converts the music data into an internal format for memory card (step S305). When receiving otherwise, the data conversion unit 22 converts the music data into a general internal format as shown in FIG. 3b (step S306).

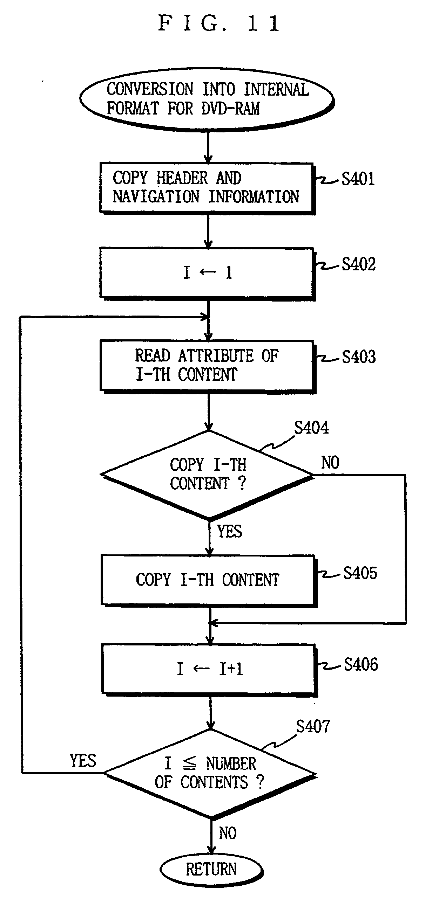

The data conversion unit 22 converts the music data into the internal format based on the type of the external storage medium 7 with the following procedure. FIG. 11 is a flowchart showing a process for conversion into the internal format for DVD-RAM. The process shown in FIG. 11 corresponds to the process in step S303 of the flowchart shown in FIG. 10.

The data conversion unit 22 first copies the header 40 and the navigation information 41 included in the distribution format (step S401), and initializes a variable I to 1 (step S402). Then, the data conversion unit 22 carries out the processes from steps S403 through S407 for each content 42. The data conversion unit 22 reads an attribute of an I-th content from the header 40 (step S403). Based on the read attribute, the data conversion unit 22 determines whether the I-th content is to be copied to the DVD-RAM disk or not (step S404), and if yes, copies the I-th content to the external storage medium 7 (step S405). Then, the data conversion unit 22 increments the variable I by 1 (step S406). If the variable I is not greater than the number of contents, the procedure returns to step S403 (step S407).

In the flowcharts shown in FIGS. 10 and 11, the data conversion process for the external storage media of certain types is shown. If the external storage medium of another type is connected to the data processing apparatus 2, a similar process is added to each flowchart.

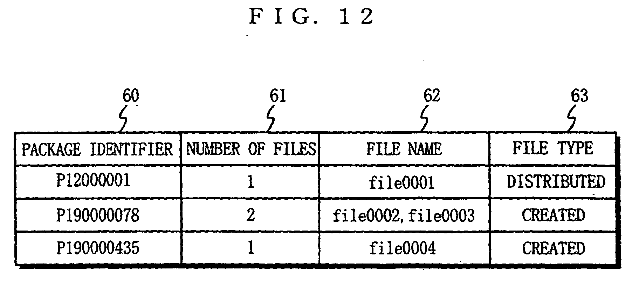

The control unit 17 manages the internal-format music data using a package management table shown in FIG. 12. The package management table shown in FIG. 12 includes a package identifier 60, the number of files 61, a file name 62, and a file type 63. Each row in FIG. 12 corresponds to one package.

The package identifier 60 is used for identifying each package. However, if the header is changed at conversion from the distribution format to the internal format, a new package identifier is assigned to the package. The number of files 61 represents the number of files included in the package, and the file name 62 represents the name of each file. The file type 63 represents an attribute of the file included in the package. A file type "distributed" indicates that the file is a distributed one, while a file type created" indicates that the file was created by the user.

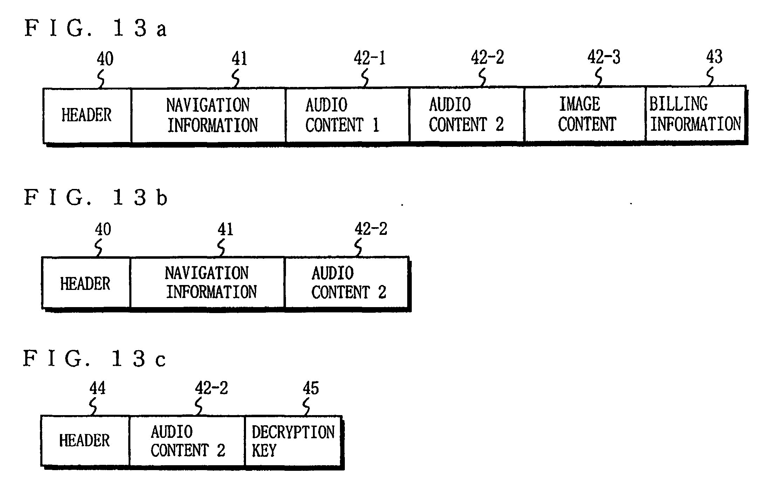

Next, the effect of the data processing apparatus 2 according to the present embodiment is described. FIGS. 13a, 13b, and 13c are diagrams showing the music data in the distribution format, in the internal format, and in the copy format, respectively. Music data in the distribution format shown in FIG. 13a includes audio contents 42-1 and 42-2 and an image content 42-3. It is assumed herein that, of these contents, only the audio content 42-2 can be checked out to the external storage medium 7. In this case, music data in the copy format shown in FIG. 13c includes only the content 42-2.

In expectation of later conversion into the copy format, the data processing apparatus 2 converts the music data from the distribution format to the internal format shown in FIG. 13b for storage. The music data in the internal format includes only the audio content 42-2 that can be checked out to the external storage medium 7.

As stated above, by converting the distributed music data into the internal format suitable for the type of the external storage medium 7, the amount of data in the data processing apparatus 2 can be reduced. The content 42 is large in the amount of data because of audio and images compressed therein. Therefore, by storing only the content that can be checked out later, the amount of data can be significantly reduced.

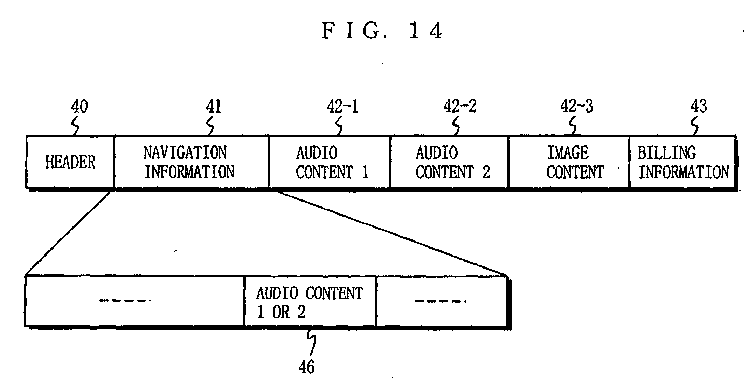

Furthermore, the distributed music data may include a plurality of contents obtained by applying a plurality of compression methods to a single original data. FIG. 14 shows an example of such music data. It is assumed in FIG. 14 that the audio contents 42-1 and 42-2 have been obtained by applying two compression methods to a single original data. In this case, the navigation data includes content selection data 46 indicating that one content can be selected from a plurality of contents.

When such music data is distributed, the data conversion unit 22 selects the contents that can be checked out to the connected external storage medium from the plurality of contents. The music data in the internal format includes only the selected contents. For example, if the external storage medium is a memory card, the music data in the internal format includes only the contents that can be checked out to the memory card. By selecting and storing the contents in the above described manner, the amount of data stored in the internal data storage unit 15 can be reduced.

Still further, the distributed music data may include a plurality pieces of navigation information 41 based on each type of the external storage medium. Also in this case, the navigation information suitable for the connected external storage medium is selected from the plurality pieces of navigation information 41, and only the selected navigation information is included in the music data in the internal format. Here, the navigation information may include a plurality of programs supporting the type of the data processing apparatus or the portable music player. Moreover, if the music data includes a plurality of contents supporting a plurality of languages, the contents in the specified language are selected.

As stated above, even if the music data includes a plurality of contents or a plurality pieces of navigation information, the distributed music data is converted into the internal format based on the type of the external storage medium, thereby enabling reduction in stored data amount.

In the present embodiment, the music data is copied to DVD-RAM or a memory card. If the copyrighted data is a game software, the type of a game machine is specified, and then data is copied to a memory card for the game machine, etc.

### (Third Embodiment)

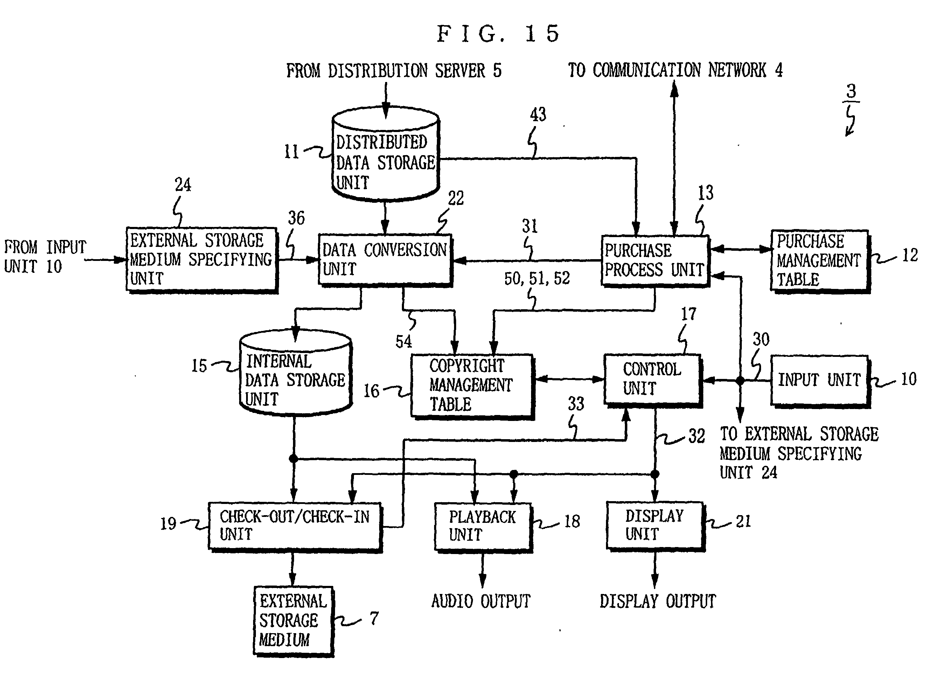

FIG. 15 is a block diagram showing the structure of a data processing apparatus 3 according to the third embodiment of the present invention. The data processing apparatus 3 shown in FIG. 15 includes the input unit 10, the distributed data storage unit 11, the purchase management table 12, the purchase process unit 13, the data conversion unit 22, the internal data storage unit 15, the copyright management table 16, the control unit 17, the playback unit 18, the check-out/check-in unit 19, the display unit 21, and an external storage medium specifying unit 24. The data processing apparatus 3 is used in the same music distribution system as that for the data processing apparatuses according to the first and second embodiments. The data processing apparatus 3 is characterized by converting distributed music data into an internal format based on the type of the specified external storage medium. The components in the third embodiment identical to those in the second embodiment are provided with the same reference numerals, and their description is omitted herein.

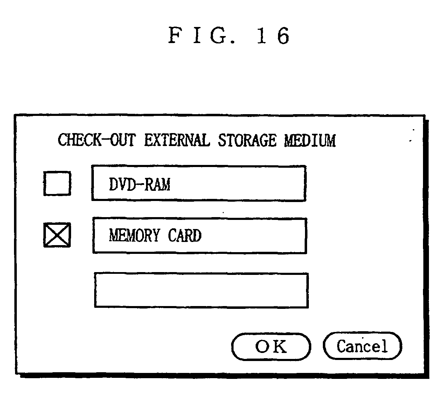

In the data processing apparatus 3, the user specifies the type of the external storage medium 7 through the input unit 10. The user can specify not only the type of the external storage medium being connected at that moment, but also the type of the external storage medium that will be later connected. When the user specifies the type of the external storage medium, the display unit 21 displays a screen as shown in FIG. 16. On this screen, any one of DVD-RAM and a memory card can be specified as the external storage medium. The screen shows that the memory card is specified at this moment. Through this screen, the user can specify the type of the external storage medium to which the music data is checked out.

Referring back to FIG. 15, when receiving the instruction 30 for specifying the external storage medium 7 from the input unit 10, the external storage medium specifying unit 24 stores the type of the specified external storage medium. The external storage medium specifying unit 24 then provides a specifying signal 36 indicating the stored type of the external storage medium to the data conversion unit 22.

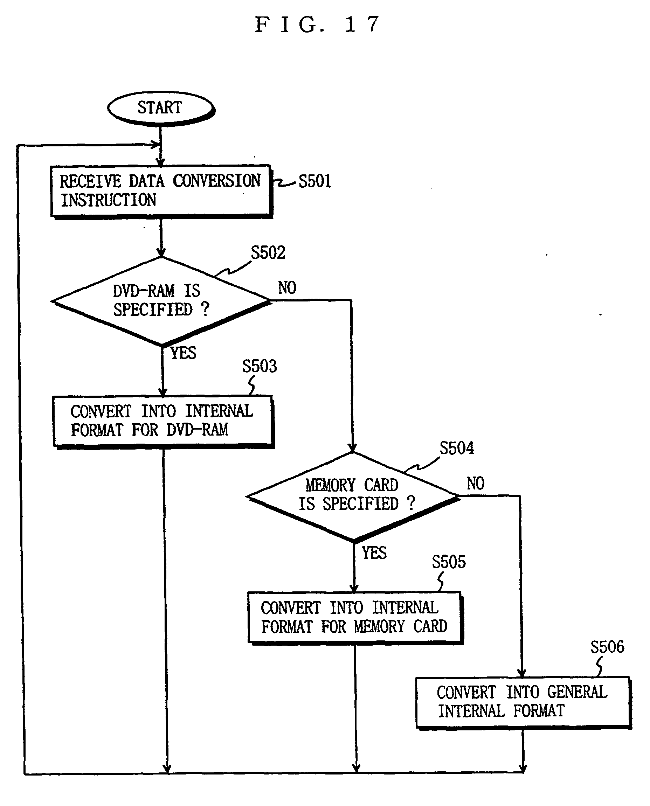

Similarly to the second embodiment, the data conversion unit 22 operates according to a flowchart shown in FIG. 17. Based on the specifying signal 36, the data conversion unit 22 converts the music data stored in the distributed data storage unit 11 into the internal format predetermined for each specified type of the external storage medium. The flowchart shown in FIG. 17 is similar to that shown in FIG. 10, and therefore its description is omitted herein.

Next, the effect of the data processing apparatus 3 according to the present embodiment is described. The music data in the internal format in the data processing apparatus 3 includes only the content that can be checked out to the specified external storage medium. Therefore, similarly to the second embodiment, the amount of data stored can be reduced.

In addition, the user can also specify the type of the external storage medium that will be later connected. Therefore, it is possible to convert the music data to comply with such external storage medium. Thus, with the user specifying an appropriate check-out destination, the amount of data to be stored can be further reduced.

Note that the data processing apparatuses according to the first to third embodiments can be achieved by combining a computer and a program operable on the computer. The data processing apparatus of the present invention can be realized by recording the program on a recording medium typified by a floppy disk and installing the program in an arbitrary computer system.

### (Fourth Embodiment)

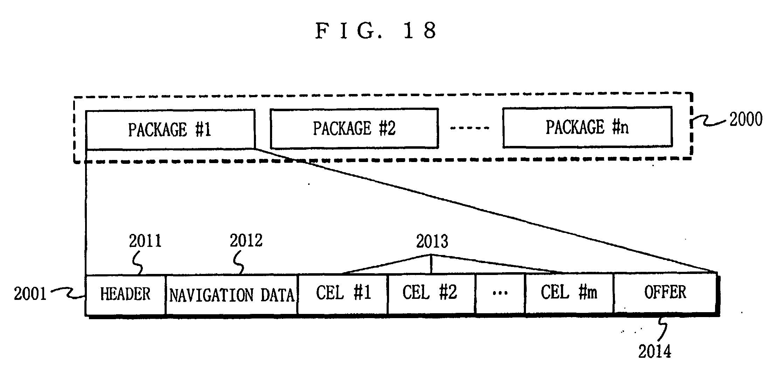

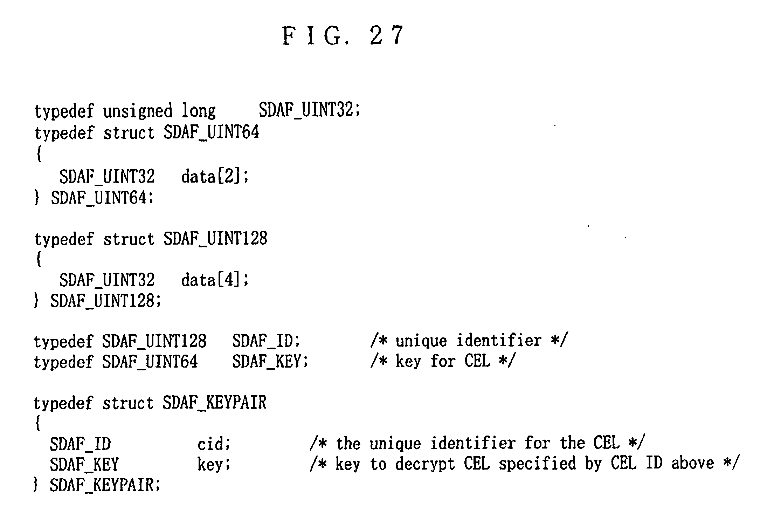

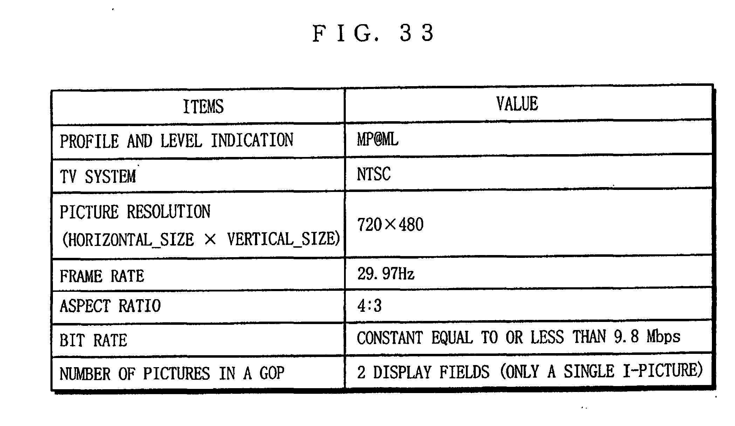

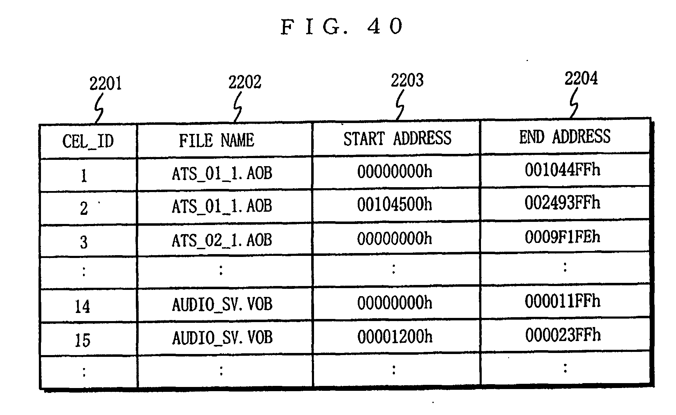

As the fourth embodiment, as a specific example of copyrighted data as mentioned in the first to third embodiments, a content distribution format called SDAF (Secure Digital Audio Format) is described below. Referring to FIGS. 18 to 39, details on the SDAF is first described, and then referring to FIGS. 40 to 45, how to use the SDAF is described.

The content distribution format (SDAF) according to the present embodiment is used for describing multimedia contents that include audio, images, video, text, and file data. The multimedia contents described with SDAF are herein called an SDAF title. Presentation data each comprising the SDAF title is herein called a content element (hereinafter abbreviated as CEL). Each CEL is assigned a CEL identifier that is unique in the SDAF title (hereinafter abbreviated as CEL_ID).

The SDAF title is distributed as being split into units called SDAF packages. Each SDAF package is assigned a package identifier that is unique in the entire distribution system. FIG. 18 is a diagram showing an example of the SDAF package. As shown in FIG. 18, an SDAF title 2000 is composed of a plurality of SDAF packages. Each package 2001 is composed of a header 2011, navigation data 2012, a plurality of CELs 2013, and an offer 2014.

The header 2011 includes information such as location, size, and attribute of each data in the package. Such information defines the package structure. The navigation data 2012 is playback control information specifying the operation of the player in playing back the SDAF title. From the navigation data 2012, a CEL included in the package to which the navigation data belong or in other packages is referred to. The CEL 2013 is obtained by encrypting each presentation data composing the SDAF title, and more specifically, by encrypting audio, images, video, text, or file data. A pair of a decryption key for decrypting the CEL 2013 and CEL_ID is called a key pair. The offer 2014 includes a plurality of key pairs, and purchase rules describing the purchase price and available period for each key pair.

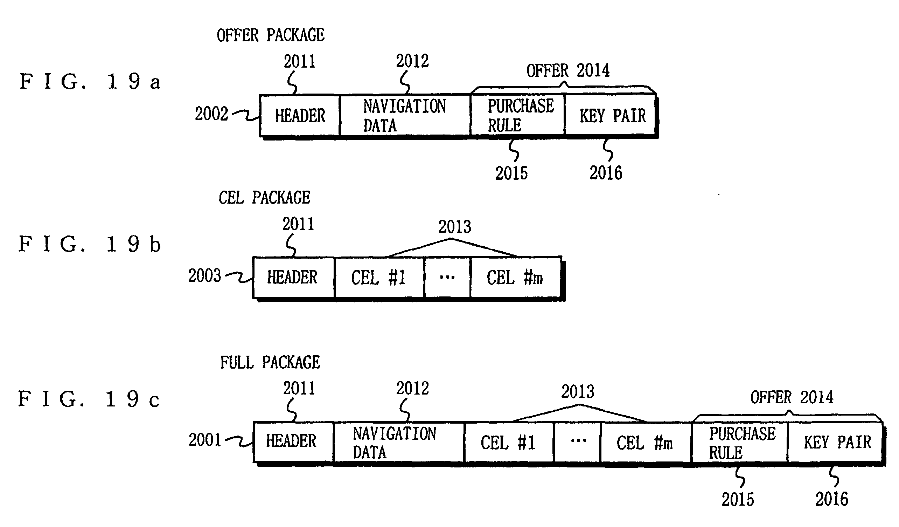

FIGS. 19a to 19c are diagrams showing three types of SDAF packages. A full package 2001 shown in FIG. 19c includes, similarly to FIG. 18, a header 2011, navigation data 2012, a plurality of CELs 2013, and an offer 2014. An offer package 2002 shown in FIG. 19a includes the header 2011, the navigation data 2012, and the offer 2014, but does not include any CEL 2013. A CEL package 2003 shown in FIG. 19b includes the header 2011 and the plurality of CELs 2013. Since the navigation data 2012 is required for playing back the SDAF title, the full package 2001 and the offer package 2002 can be played back alone, but the CEL package 2003 cannot.

The CEL package is used for splitting the SDAF title according to the distribution channel. For example, when distributed by using a CD-ROM, the SDAF title is recorded as a full package in the CD-ROM. On the other hand, when distributed through the Internet, the SDAF title is split into one full package and a plurality of CEL packages for distribution. For example, the SDAF title is split into one full package including an audio CEL and a plurality of CEL packages including a video CEL that is referred to from the full package for distribution.

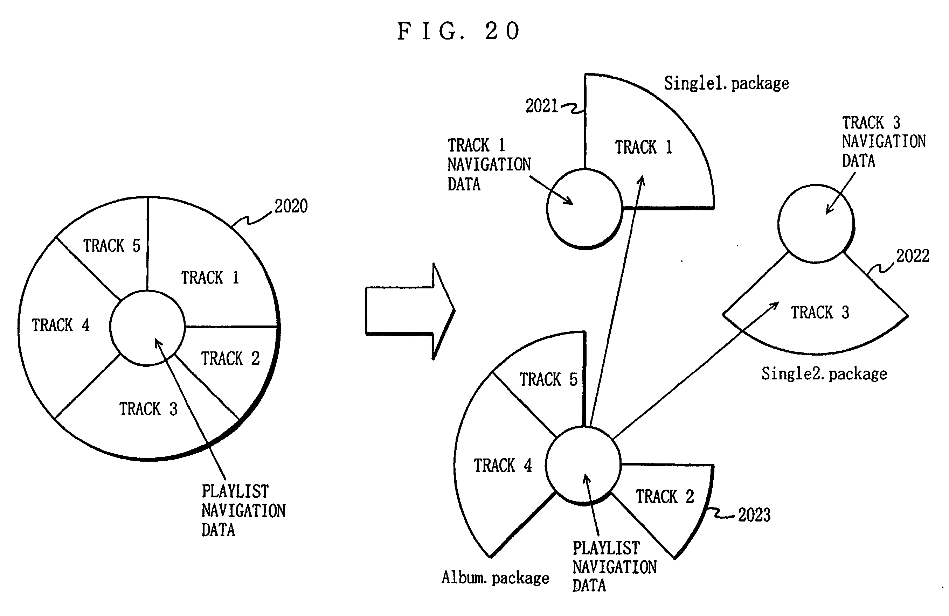

Further, as shown in FIG. 20, the SDAF title may be split into a plurality of SDAF packages by tracks. In package division as shown in FIG. 20, an SDAF title 2020 including audio data for five tracks is split into three packages 2021 to 2023. The first to third packages 2021 to 2023 have package names Single1, Single2, and album, respectively. The first and second packages 2021 and 2022 both include an audio CEL for one track and navigation data for controlling playback of the CEL. The third package 2023 includes an audio CEL for three tracks and navigation data for controlling playback of all audio CELs included in the first to third packages 2021 to 2023. As such, by dividing the SDAF title into a plurality of SDAF packages, it is possible to make each data size smaller and easily handle each data.

The header, offer, navigation data, and CEL, which compose the SDAF package, are described in this order below.

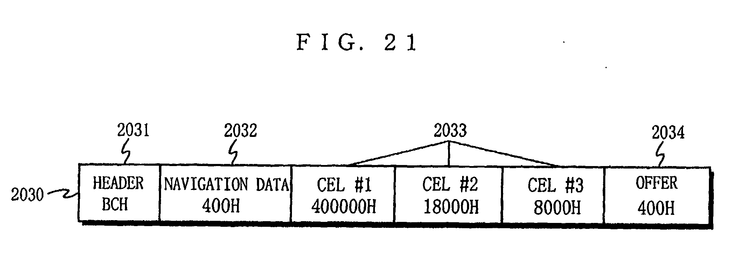

The header 2011 is first described. Here, an SDAF package shown in FIG. 21 is taken as an example, and a header 2031 of an SDAF package 2030 is described. In the SDAF package 2030, it is herein assumed that the size of navigation data 2032 and the size of an offer 2034 are 400H each, in hexadecimal notation. This package includes three CELs 2033, and the types thereof are, from first, audio, image, and file. It is assumed herein that the sizes of these CELs are, from first, 400000H, 18000H, and 8000H in hexadecimal notation.

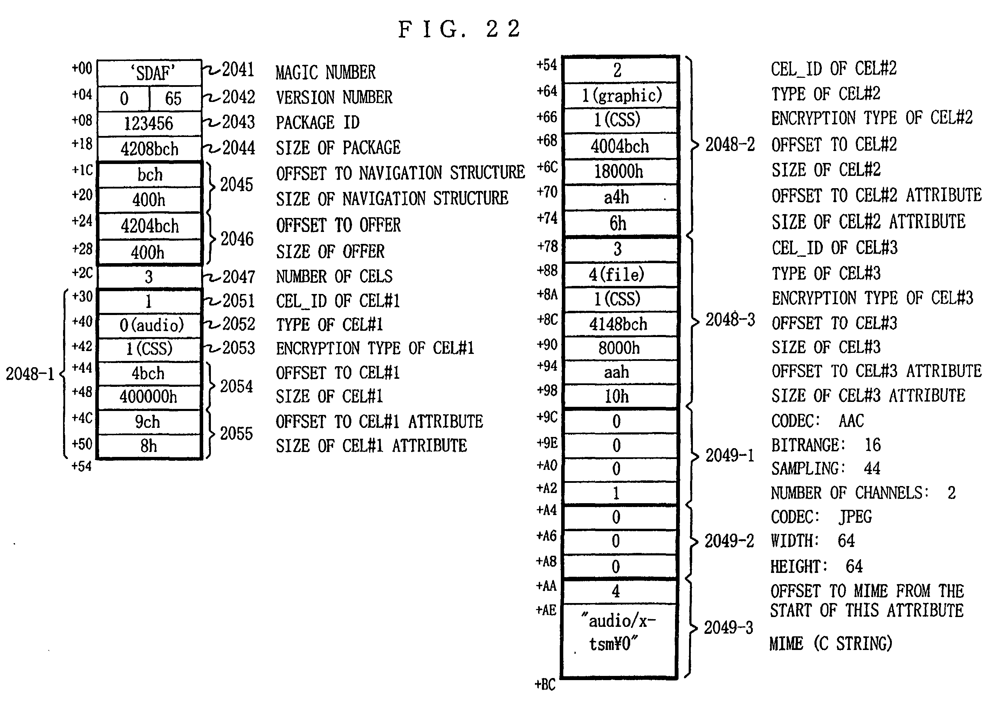

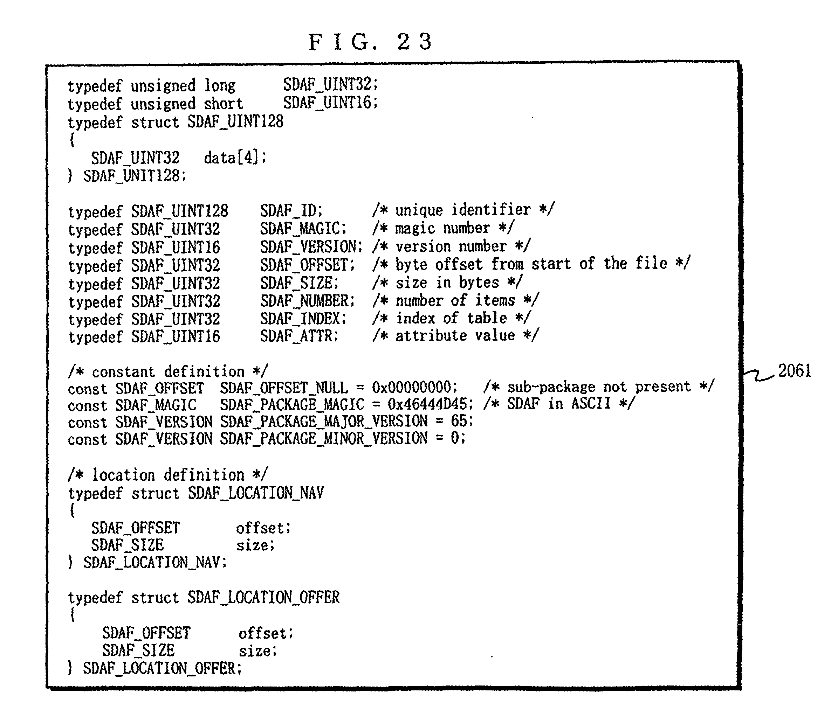

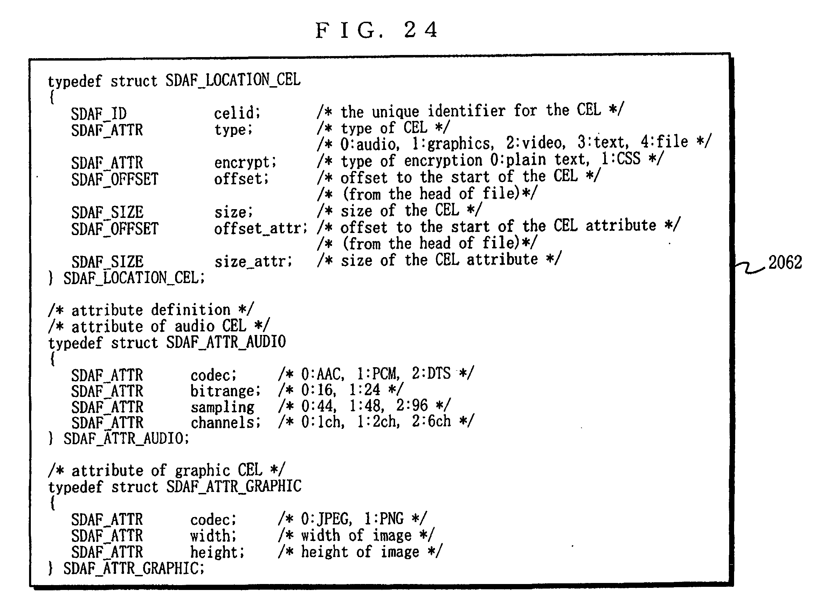

FIG. 22 is a diagram showing the structure of the header 2031. In the header 2031, data as described below is sequentially stored, and the size of the header is BCH in hexadecimal notation. Note that the structure of the header 2031 can be described in the C++ language as shown in FIGS. 23 and 24. FIGS. 23 and 24 are a diagram showing a sequential source code as being split into two, and before division, a source code 2062 shown in FIG. 24 follows a source code 2061 shown in FIG. 23.

At the start of the header 2031, a magic number 2041 (4 bytes) indicating that the file is in the SDAF format is stored. The value of the magic number 2041 is a character string SDAF". Then, a version number 2042 (4 bytes) of the SDAF is stored. Then, a package ID 2043 (16 bytes) and a package size 2044 (4 bytes) are stored. Then, navigation data location information 2045 (SDAF_LOCATION_NAV in FIG. 23), offer location information 2046 (SDAF_LOCATION_OFFER in FIG. 23), and the number of CELs in the package 2047 are stored. Then, CEL information 2048 (SDAF_LOCATION_CEL in FIG. 24) for each CEL is stored. Lastly, a CEL attribute table 2049 indicating an attribute of each CEL is stored.

The navigation data location information 2045 indicates the location and size of the navigation data 2032. The offer location information 2046 indicates the location and size of the offer 2034. These two pieces of information are both composed of an offset (4 bytes) from the start of the SDAF package and each size (4 bytes) thereof.

The CEL information 2048 is composed of a CEL_ID 2051 (16 bytes), a CEL type 2052 (2 bytes), a CEL encryption type 2053 (2 bytes), a CEL data location information 2054, and a CEL attribute table location information 2055. The CEL_ID 2051 is a content element identifier that is unique in the SDAF title. The CEL type 2052 takes any value of audio, image, video, text, and file. The CEL encryption type 2053 indicates an algorithm used for encrypting the CEL. The CEL data location information 2054 and CEL attribute table location information 2055 are both composed of an offset (4 bytes) from the start of the SDAF package and each size (4 bytes) thereof. If the offset or size is 0, that means no data exists.

The CEL attribute table 2049 is a list of attributes specified for each CEL type. An audio CEL attribute table (SADF_ATTR_AUDIO in FIG. 24) includes at least CODEC, the number of quantized bits, sampling frequency, and the number of audio channels. An image CEL attribute table (SDAF_ATTR_GRAPHIC in FIG. 24) includes at least the height and width of the image and the encryption type. A video CEL attribute table includes at least the height and width of the video and the encryption type. A text attribute table includes at least the encryption type of the text, such as Unicode or music shift JIS (Japanese Industrial Standards). A file CEL attribute table includes at least the type of MIME (Multipurpose Internet Message Extension).

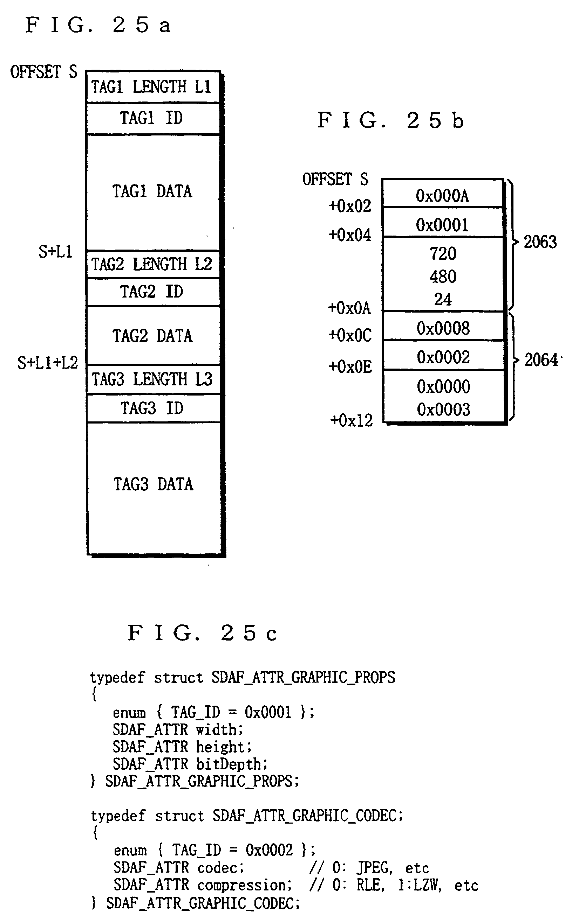

The CEL attribute table 2049 is defined not as a fixed-length table but with a variable-length tag structure as shown in FIGS. 25a to 25c. If the tag structure is used, a tag length and tag ID are stored preceding the data, as shown in FIG. 25a. For example, the image CEL attribute table is composed of a characteristic tag 2063 and an encryption type tag 2064. The table elements are specified by using the tag structure, thereby a new table element can be added to the data format or the data format can be changed only by adding a tag. The CEL attribute table is specified by using the tag structure with a great potential for expansion.

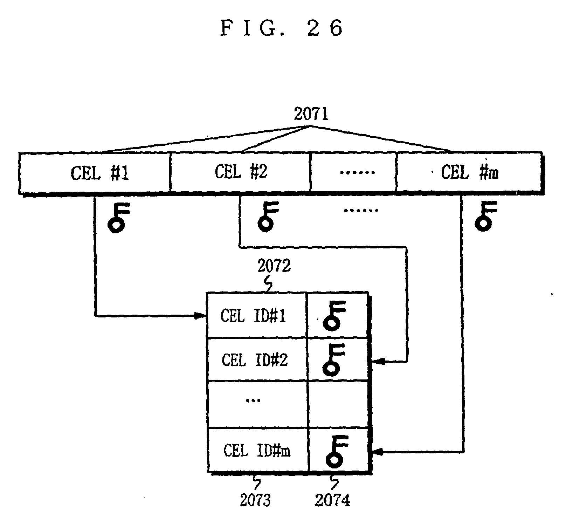

Next, the offer 2014 is described. As stated above, the offer includes a plurality of key pairs and purchase rules for each key pair. Each key pair is composed of a decryption key for decrypting the CEL and a CEL_ID. FIG. 26 is a diagram showing the correspondence between the key pair and the CEL. As shown in FIG. 26, a key pair 2072 is composed of a decryption key 2073 and a CEL_ID 2074, and each key pair 2072 is related to each CEL 2071. The offer includes not only the key pair of the CEL included in the SDAF package but also all key pairs of the CELs included in the SDAF packages of the same SDAF title. In other words, when one SDAF title is split into a plurality of SDAF packages, only one SDAF package includes an offer, and this offer includes all key pairs of the CELs included in the SDAF title.

The purchase rules are described by using a language for describing use conditions of the key pair, called right management language. The use conditions of the key pair include the date of purchase, use period, and whether a specific CEL or SDAF title has been purchased or not. The purchase rules are specified by using these use conditions, and thereby the same CEL can be sold at different prices depending on the conditions.

Next, the navigation data 2012 is described. The navigation data is created by a content creator so that the user can use the CEL most effectively, defining the logic structure of the SDAF title.

In SDAF, XML (eXtensible Markup Language), which is a tag description language in a text format, is used for describing the navigation data. When the data structure is described in XML, a tag structure in a text format is used. Therefore, data described in XML is redundant compared with binary data. Nevertheless, XML is adopted because of its excellent expandability.

To refer to the CEL from the navigation data, a CEL locator is used. The CEL locator is a concatenation of the package ID and CEL_ID taking '?' (question mark) as a delimiter. However, for the CEL included in the SDAF package that includes the navigation data, the package ID and the delimiter are omitted, and the CEL_ID becomes the CEL locator. The CEL locator can specify the CEL independently of the physical address of the CEL.

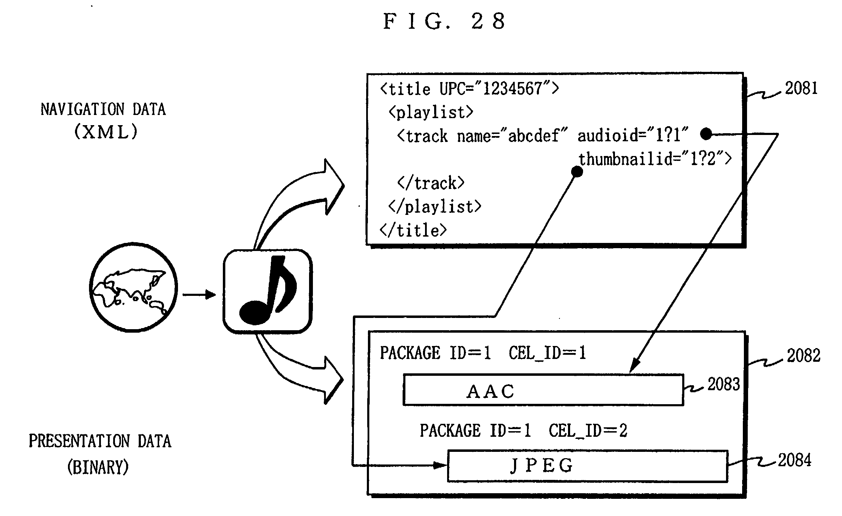

FIG. 28 is a diagram showing how to refer to the CEL from the navigation data by using the CEL locator. In FIG. 28, navigation data 2081 and presentation data 2082 are shown as an example. The presentation data 2082 includes an audio CEL 2083 encoded with MPEG2-AAC and an image CEL 2084 encoded with JPEG. The package ID and CEL_ID of the audio CEL 2083 are both 1, while those of the image CEL 2084 are 1 and 2, respectively. In this case, a CEL locator "1?1" included in the navigation data 2081 indicates the audio CEL 2083 with its package ID "1" and CEL_ID "1". A CEL locator "1?2" indicates the image CEL 2084 with its package ID "1" and CEL_ID "2". As known from this example, only a change in the package ID of the CEL locator after creation of the SDAF title can cause a change in the structure of the SDAF package. Therefore, it is possible to structure the SDAF title as a single package or split the SDAF title into a plurality of SDAF packages.

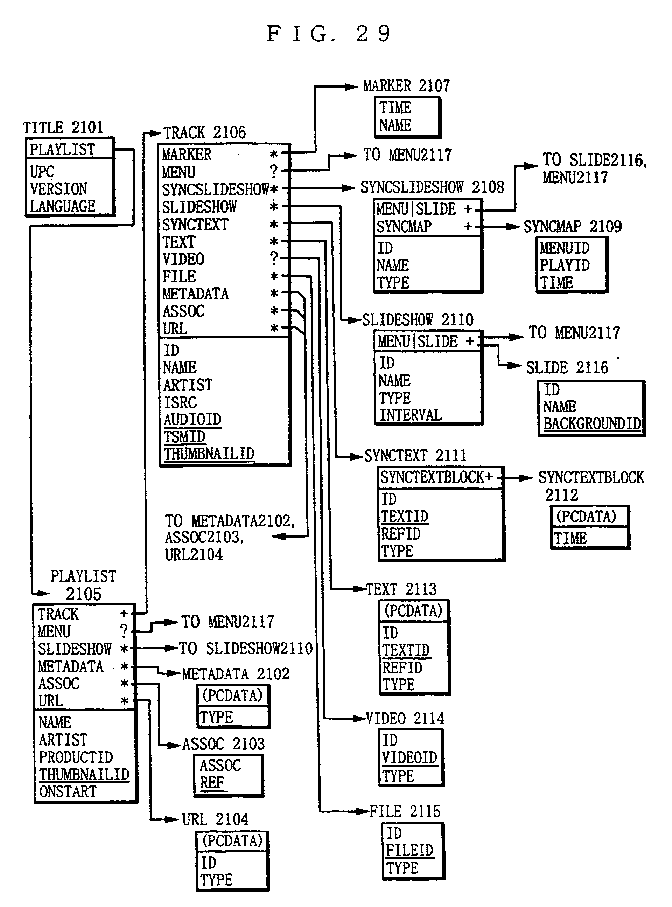

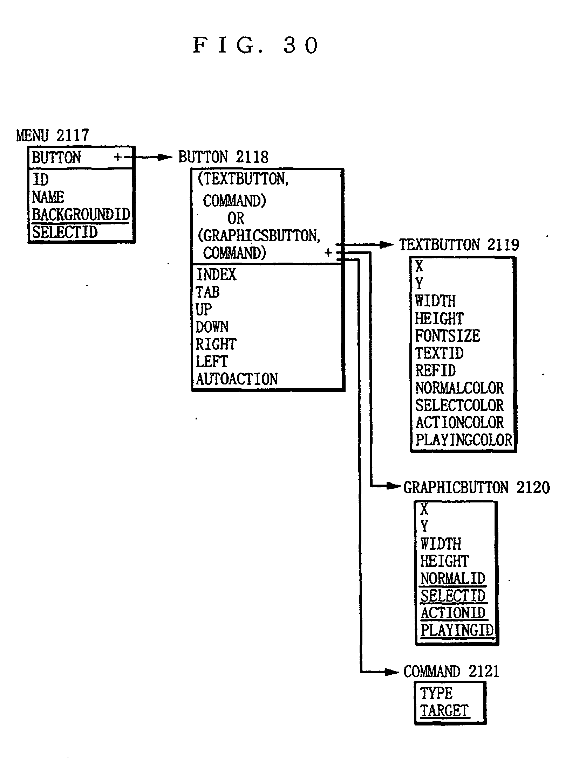

FIGS. 29 and 30 are diagrams showing the structure of the navigation data based on the following representation manner. Each rectangle represents an element of the navigation data. An arrow drawn from an element A to an element B indicates that the element A includes the element B as a descendant element. Each mark provided at the start of each arrow indicates as follows: * indicates that the element includes 0 or more descendant elements; + indicates that the element includes 1 or more descendant elements; and ? indicates that the element includes 0 or 1 descendant element. If the element A includes an item P without any arrow, that means the element A has the item P as an attribute. Underlined items represent CEL locators. PCDATA represents a character string composed of characters included in a predetermined character set. This representation specifies a hierarchical structure with a TITLE element as a root.

A TITLE element 2101 describes shipping information of the SDAF title. This element has three attributes: UPC, VERSION, and LANGUAGE. The UPC attribute describes a UPC (Universal Product Code), which is the international standards of product codes. The VERSION attribute describes the version number of the SDAF navigation structure. The LANGUAGE attribute describes the type of language according to ISO 639. Its default value is "en" indicating English.

A METADATA element 2102 describes information such as genre of a PLAYLIST or TRACK element. The METADATA element has a TYPE attribute. The TYPE attribute describes the type of the METADATA element.

An ASSOC element 2103 describes reference information to a CEL included in other SDAF titles. This element has a REF attribute. The REF attribute describes the CEL locator.

A URL element 2104 describes the URL (Uniform Resource Locator). This element has two attributes: ID and TYPE. The ID attribute describes the identification number of this element. The TYPE attribute describes the type of the URL element.

A PLAYLIST element 2105 describes a playlist, which is a basic unit for the SDAF title. The playlist corresponds to an album in the conventional package media, and is included in all SDAF titles. The PLAYLIST element may include a MENU element, which is a menu for the playlist. The PLAYLIST element has five attributes: NAME, ARTIST, PRODUCTID, THUBMNAILID, and ONSTART. The NAME attribute describes the name of the playlist. The PRODUCTID attribute describes information corresponding to a catalog code in a CD. The THUMBNAILID attribute describes the CEL locator of the image CEL that is typical in the playlist. The ONSTART attribute describes the operation for playing back the playlist. If the ONSTART attribute is MENU", the player stops playing while displaying a playlist menu. If "TRACK", the player starts playing back the first TRACK element included in the PLAYLIST element. All PLAYLIST elements have at least one TRACK element 2106.

The TRACK element 2106 describes the track including one audio CEL. The TRACK element may include a track menu, slideshow, text, file, and others. The TRACK element has seven attributes: ID, NAME, ARTIST, ISRC, AUDIOID, TSMID, and THUMBAILID. The ID attribute describes the identification number that is unique in the SDAF title. The NAME attribute describes the name of the TRACK element. The ARTIST attribute describes the name of the artist. The ISRC attribute describes ISRC (International Standard Recording Code). The AUDIOID attribute describes the CEL locator of the audio CEL related to the TRACK element. The TSMID attribute describes the CEL locator of a time search map corresponding to the audio CEL. The time search map will be described later. The THUMBNAILID attribute describes the CEL locator of the image CEL that is typical in the TRACK element.

A MARKER element 2107 describes a marker for use in finding the start in the TRACK element. This element has two attributes: TIME and NAME. The TIME attribute describes the location of the marker in milliseconds. The NAME attribute describes the name of the marker.

A SYNCSLIDESHOW element 2108 describes a slideshow for displaying slides or menus by following display timing information specified by a SYNCMAP element 2109. The SYNCSLIDESHOW element 2108 has three attributes: ID, NAME, and TYPE. The ID attribute describes the identification number that is unique in the SDAF title. The NAME attribute describes the name of the slideshow. The TYPE attribute describes the information category in the track, such as credits, lyrics, liner notes, biography, image collection, or promotion.

The SYNCMAP element 2109 describes the display timing information for the slide or the menu specified in the SYNCSLIDESHOW element. The SYNCMAP element 2109 has three attributes: MENUID, PLAYID, and TIME. The MENUID attribute describes the identification number of the slide or menu to be displayed. The PLAYID attribute describes the index number for specifying a button to be set in a playback state on the menu. The TIME attribute describes the display timing in milliseconds.

A SLIDESHOW element 2110 describes the slideshow for displaying slides or menus at predetermined display intervals. This element has four attributes: ID, NAME, TYPE, and INTERVAL. The ID attribute describes the identification number that is unique in the SDAF title. The NAME attribute describes the name of the slideshow. The TYPE attribute describes the information category in the track, such as credits, lyrics, liner notes, biography, image collection, or promotion. The INTERVAL attribute describes the display interval of the slide or menu.

A SYNCTEXT element 2111 describes text information to be displayed with predetermined timing. The text information is described by using a SYNCTEXTBLOCK element 2112. Alternatively, the text information may be specified by referring to part of the text CEL. The SYNCTEXT element has four attributes: ID, TEXTID, REFID, and TYPE. The ID attribute describes the identification number that is unique in the SDAF title. The TEXTID attribute describes the CEL locator of the text CEL. The REFID attribute describes the identification number of a TEXTREF element in the text CEL specified by the TEXTID attribute. The TEXTREF element will be described later. The TYPE attribute describes the information category in the track, such as credits, lyrics, liner notes, biography, image collection, or promotion.

The SYNCTEXTBLOCK element 2112 describes the text information to be displayed with predetermined timing. This element has a TIME attribute. The TIME attribute describes the display timing in milliseconds.

The TEXT element 2113 describes text information. The text information is described in a text data format. Alternatively, the text information may be specified by referring to part of the text CEL. The TEXT element has the same types of attributes as the SYNCTEXT element has.

A VIDEO element 2114 describes any existing video CEL. This element has three attributes: ID, VIDEOID, and TYPE. The ID attribute describes the identification number that is unique in the SDAF title. The VIDEOID attribute describes the CEL locator of the video CEL. The TYPE attribute describes the information category in the track, such as credits, lyrics, liner notes, biography, image collection, or promotion.

A FILE element 2115 describes any existing file CEL. This element has three attributes: ID, FILEID, and TYPE. The ID attribute describes the identification number that is unique in the SDAF title. The FILEID attribute describes the CEL locator of the file CEL. The TYPE attribute describes the information category in the track, such as credits, lyrics, liner notes, biography, image collection, or promotion.

A SLIDE element 2116 describes a slide. This element has three attributes: ID, NAME, and BACKGROUNDID. The ID attribute describes the identification number that is unique in the SDAF title. The NAME attribute describes the name of the slide. The BACKGROUNDID attribute describes the CEL locator of the image CEL on a slide screen.

A MENU element 2117 describes a menu. The menu has one or more onscreen buttons. The MENU element has four attributes: ID, NAME, BACKGROUNDID, and SELECTID. The ID attribute describes the identification number that is unique in the SDAF title. The NAME attribute describes the name of the menu. The BACKGROUNDID attribute describes the CEL locator of the image CEL displayed on a menu screen. The SELECTID attribute describes the index number for specifying a button to be set in a select state.

A BUTTON element 2118 describes the onscreen buttons arranged on the menu screen. The BUTTON element includes, as descendant elements, one or more pairs of TEXTBUTTON and COMMAND elements or those of GRAPHICBUTTON and COMMAND elements. The BUTTON element has seven attributes: INDEX, TAB, UP, DOWN, RIGHT, LEFT, and AUTOACTION. The INDEX attribute describes the index number that is unique in the MENU element. The TAB attribute describes the sequential number sequentially and circulatively provided for each of the buttons on the menu. The UP, DOWN, LEFT, and RIGHT attributes describe the index number of the selected destination button located upward, downward, leftward, and rightward, respectively, from the current button. The AUTOACTION attribute describes the flag indicating whether the state is automatically changed from select to active.

A TEXTBUTTON element 2119 describes the onscreen button represented by text. This element has eleven attributes: X, Y, WIDTH, HEIGHT, FORNTSIZE, NORMALCOLOR, SELECTCOLOR, ACTIONCOLOR, PLAYINGCOLOR, TEXTID, and REFID. The X, Y, WIDTH, and HEIGHT attributes each describe the display location of the button using a coordinate system taking the upper-left corner of the menu as the origin. The FONTSIZE element describes the font size in points. The NORMALCOLOR, SELECTCOLOR, ACTIONCOLOR, and PLAYINGCOLOR attributes describe a display color in RGB format when the button state is normal, select, active, and playback, respectively. The TEXTID attribute describes the CEL locator of an external text CEL. The REFID attribute describes the identification number of the TEXTREF element in the text CEL specified by the TEXTID.

A GRAPHICBUTTON element 2120 describes the onscreen button represented as graphics. This element has eight attributes: X, Y, WIDTH, HEIGHT, NORMALID, SELECTID, ACTIONID, and PLAYINGID. The X, Y, WIDTH, and HEIGHT attributes each describe the display location of the button using a coordinate system taking the upper-left corner of the menu as the origin. The NORMALID, SELECTID, ACTIONID, and PLAYINGID attributes each describes the CEL locator of the image CEL displayed when the button state is normal, select, active, and playback, respectively.

A COMMAND element 2121 describes the navigation operation when the user presses one of the onscreen buttons. This element has two attributes: TYPE and TARGET. The TYPE attribute describes any one of SHOW, FUNCTION, GOTO, NEXT, and PREVIOUS commands. The SHOW command is for displaying the element specified by the TARGET attribute. The FUNCTION command is for executing the element specified by the TARGET attribute. This command is used while a playlist menu is being displayed. The GOTO command is for moving from the element currently displayed to a specified brother element. The NEXT command is for moving from the element currently displayed to the next brother element. The PREVIOUS element is for moving from the element currently displayed to the previous brother element. The TARGET attribute describes the parameter of the command specified by the TYPE attribute. If the SHOW command is specified, the TARGET attribute describes the identification number of the element to be displayed. If the FUNCTION command is specified, the TARGET attribute describes the identification number of the element to be executed. If the GOTO command is specified, the TARGET attribute describes the identification number of the brother element of the element currently displayed.

The TEXTREF element describes text category information for use in referring from the navigation data to part of the text data stored in the text CEL. The text data included in the TEXTREF element is referred to by specifying the identification number of the TEXTREF element from the navigation data. The TEXTREF attribute has an ID attribute. The ID attribute describes the identification number that is unique in the SDAF tittle.

Next, the CEL 2013 is described. The CEL has five types: audio, image, video, text, and file. In SDAF, the data format and parameter are specified for each type of the CEL.

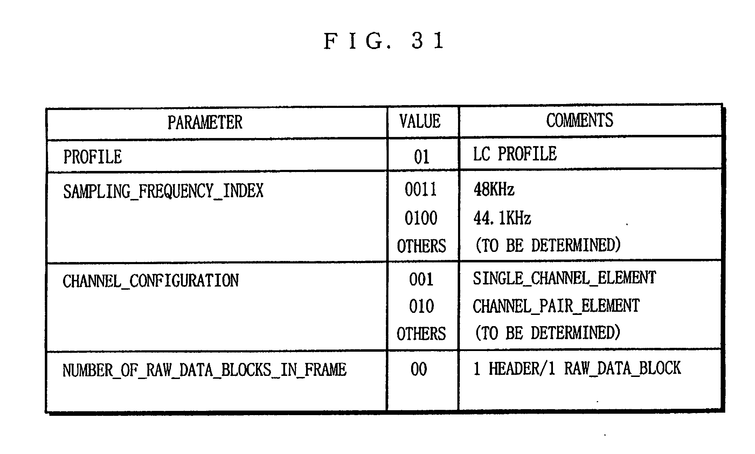

The data included in the audio CEL is audio data encoded in compliance with MPEG2-AAC (Advanced Audio Coding) [Low Complexity Profile]. Note that MPEG2-AAC is specified in ISO/IEC 13818-7: 1997(E) Information technology - Generic coding of moving pictures and associated audio information - Part7 Advanced Audio Coding (AAC). The bit stream encoded with MPEG2-AAC is assumed to be in the ADTS (Audio Data Transport Stream) format. Further, parameters described in ISO/IEC 13818-7 are restricted as shown in FIG. 31. Of these parameters, parameters other than sampling_frequency_index and channel_configuration are restricted due to selection of LC-profile specified by ISO/IEC 13818-7. Further, the average bit rate is 64 or 128 kbps.

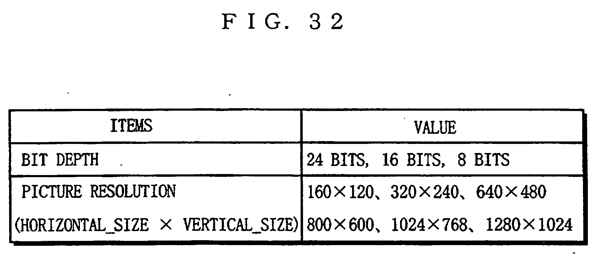

Data included in the image CEL is image data encoded in compliance with JPEG, MPEG-I frame, or PNG (Portable Network Graphics). FIGS. 32, 33, and 34 are tables showing specification of JPEG, MPEG-I frame, and PNG, respectively. The specifications for the encryption algorithms applied to the image CEL are restricted as shown in these figures.

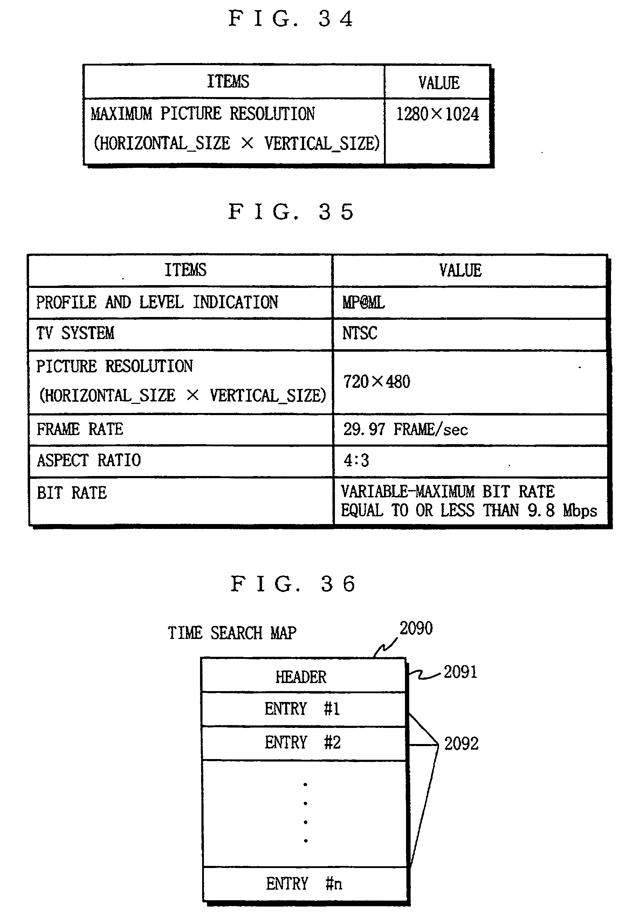

Data included in the video CEL is video data encoded in compliance with MPEG2. FIG. 35 is a table showing the specification of MPEG 2. The specification for the encryption algorithm applied to the video CEL is restricted as shown in FIG. 35.

Data included in the text CEL is PLAIN text or XML text in SDAF. The encryption type is Unicode or music shift JIS.

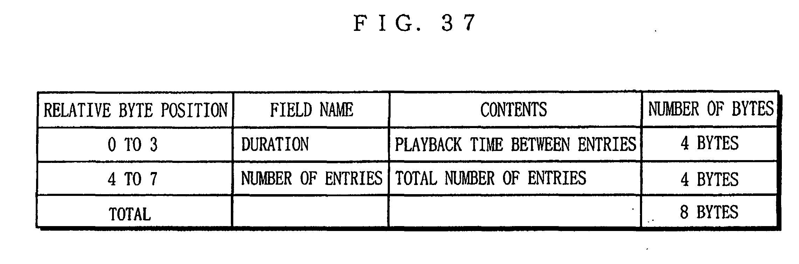

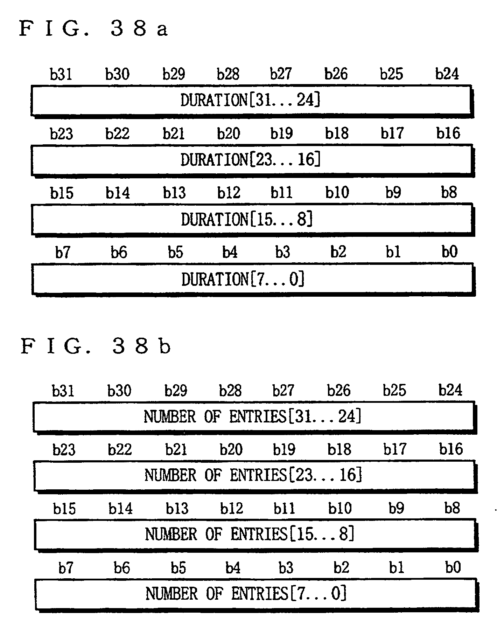

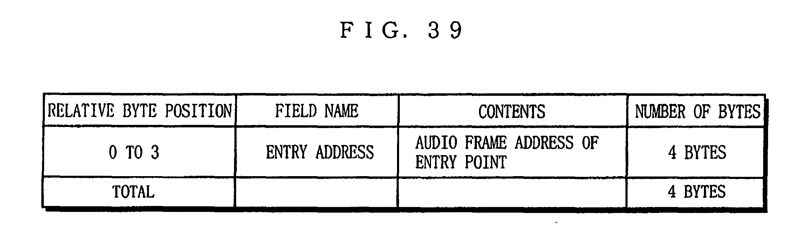

As an example of the file CEL, a time search map CEL that includes a time search map as data is now described. The time search map is a table composed of address of an audio frame. FIG. 36 is a diagram showing the structure of the time search map. As shown in FIG. 36, a time search map 2090 is composed of a header 2091 and a plurality of entries 2092. FIGS. 37, 38a, and 38b are a table and diagrams showing the header 2091 in detail. As shown in FIGS. 37, 38a, and 38b, the header 2091 includes playback duration between entries described in milliseconds and the total number of entries. FIG. 39 is a table showing each entry in detail. As shown in FIG. 39, each entry includes the address of the audio frame at its entry point. The first entry indicates the starting location of the audio frame included in the audio CEL.

Note that in the present embodiment, MPEG2-AAC is used for compressing music data included in the audio CEL. Alternatively, MP3 (MPEG1 Audio Layer 3), Dolby-AC3, or DTS (Digital Theater System) may be used.

Next, with reference to FIGS. 40 to 45, how to use the SDAF is described. As stated above, the SDAF is a format for describing multimedia contents, and mainly used for music data distribution. The SDAF can be applied to various types of recording media, typically hard disks, optical disks such as DVD-RAM, and semiconductor memory such as memory cards.

In addition to music data distribution, the SDAF can be used in combination with the existing music data. For example, to be mentioned below, the SDAF can be used in combination with music data complying with the DVD-Audio standards. Similarly, the SDAF can be applied to other recording media such as DVD-Video, CD, Video-CD, and Photo CD.

Music data complying with the DVD-Audio standards includes LPCM (Linear Pulse Code Modulation) audio contents and MPEG-I frame image contents. A player complying with the DVD-Audio standards displays a menu screen for user's interactive operation. In the DVD-Audio standards, such menu screen is displayed by superimposing a maximum of four-color sub video images onto a background image for display and providing a plurality of rectangular regions in the sub video images. Such rectangular regions are called buttons, and each button is assigned a command. However, some restrictions are applied to the number of display colors and the shape of the button and therefore the content creator cannot freely design the menu screen.

This problem can be solved by previously recording data of the menu screen described in the SDAF in a conventional DVD-Audio disk, and displaying the menu screen using this data at playback. More specifically, the DVD-Audio disk records multimedia contents described in the SDAF and a CEL redirector for referring from the SDAF to the original DVD-Audio contents. Hereinafter, a DVD-Audio disk with such data recorded thereon is called an extended DVD-Audio disk, and a player for playing back the extended DVD-Audio disk is called SDAF-compliant DVD-Audio player.

FIG. 40 is a diagram showing an example of the CEL redirectors that correspond to a single DVD-Audio disk. Each row indicates the CEL redirector for each content included in the original DVD-Audio disk. The CEL redirector includes a CEL_ID 2201, file name 2202, start address 2203, and end address 2204. The CEL_ID 2201 is a content identifier that is unique in the disk. The file name 2202 is a name of the file that includes each content. The start and end addresses 2203 and 2204 are offset values indicating the start location and end location, respectively, of each content in the file. The CEL redirector is recorded in a file named DVDA.MAP, for example, in an SDAF directory provided in the ROM area of the extended DVD-Audio disk.

All various playback control functions such as audio playback order control, slideshow image playback, and a menu function defined by the DVD-Audio standards can be described using the SDAF navigation data. For example, the menu function can be realized by superimposing JPEG button images having any number of colors and shape onto an MPEG-I frame background image for display and relating each button region to a command.

When playback control information included in the DVD-Audio disk is converted into SDAF navigation data, information indicating a content is converted into the CEL_ID by using the CEL redirector. The menu screen is converted into JPEG button images. The obtained images are arranged at locations so as to be superimposed onto the background image. The navigation data and button images as obtained in the above described manner are stored in a single SDAF package, and recorded in a file named SDAF.SDP, for example, in an SDAF directory provided in the ROM region of the extended DVD-Audio disk. The method of playing back the extended DVD-Audio disk will be described later.

Next, an SDAF player for playing back multimedia contents described with SDAF is described below. The SDAF player plays back distributed music data in the following manner. First, the player searches for the package IDs and navigation information to collect the CEL_IDs of the CELs required for playback. The player searches purchase database using sets of the collected package ID and CEL_ID to determine whether each CEL has been purchased or not. If any CEL not yet purchased is found, the player analyzes the encoded offer, and pays a predetermined price through the existing electronic distribution system. After purchasing, the key pair stored in the offer is stored in the purchase database. If determining that the SDAF package required for playback is not found in the player, the player sends out the package ID to the data distribution apparatus. The data distribution apparatus distributes an SDAF package with the received package ID to the player. After purchasing all CELs required for playback, the player decrypts the CELs using the key pairs stored in the purchase database for playback. At this time, the player interprets the navigation data for playback control.

The SDAF title is distributed to the player as being split into one or more SDAF packages. FIGS. 41a to 41c are diagrams showing examples how to distribute the SDAF packages. In a distribution method as shown in FIG. 41a, a package 2301 includes only an audio content, while a package 2302 includes only an image or video graphic content. Moreover, from the package 2302, the audio content included in the package 2301 is referred to. Therefore, the user who purchased only the package 2301 can play back only the audio content. The user who purchased the package 2302 in addition to the package 2301 can play back the graphic content together with the audio content. As such, the SDAF title may be specified by adding a CEL to the existing track.

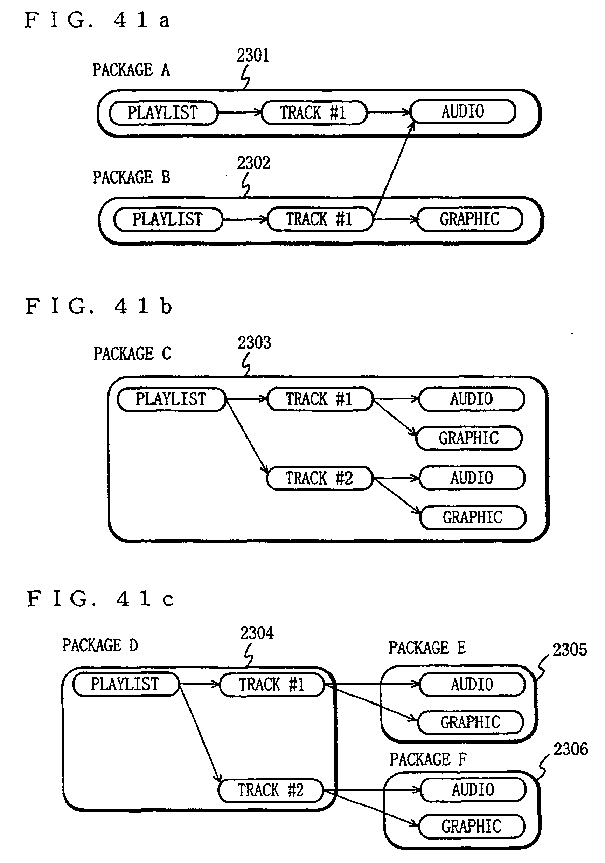

In a distribution method as shown in FIG. 41b, a package 2303 includes a plurality of audio contents and graphic contents. As such, a single package may include all CELs included in the SDAF title.

In a distribution method as shown in FIG. 41c, a single SDAF title is split into packages 2304, 2305, and 2306 for distribution. The package 2305 includes a content for Track #1, while the package 2306 includes a content for Track #2. In this distribution method, it is possible to select either one of the packages 2305 and 2306 for distribution.

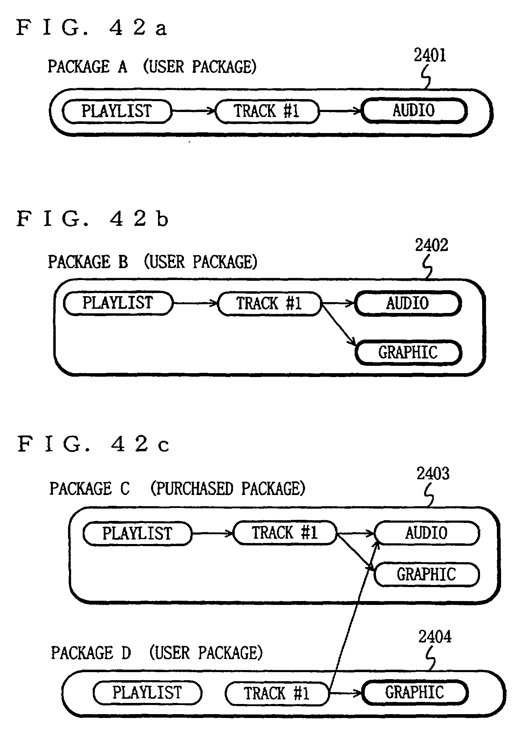

Moreover, in the player, a new SDAF package including a content owned by the user may be created. FIGS. 42a to 42c are diagrams showing examples how to create SDAF packages. In FIGS. 42a to 42c, a user package is an SDAF package created by the user, while a purchased package is a distributed SDAF package. Contents surrounded by a thick line are owned by the user. It is assumed herein that the user owns data read from a CD, that is, an audio content ripped from the CD, and a graphic content created by himself/herself.

As shown in FIG. 42a, the user may create a package 2401 including the audio content owned by himself/herself. Furthermore, as shown in FIG. 42b, the user may create a package 2402 including the audio and graphic contents owned by himself/herself. Still further, as shown in FIG. 42c, the user may create a package 2404 from which the audio content included in the purchased package 2403 is referred to. If the package 2404 is played back, the audio content included in the purchased package and the graphic content owned by the user are played back. Therefore, the image included in the purchased package can be changed to the image created by the user, or a new image created by the user can be added to the purchased package.

Next, the SDAF-compliant DVD-Audio player for playing back the extended DVD-Audio disk is described. The player controls playback operation by following the navigation data described with SDAF instead of the original playback control information complying with the DVD-Audio standards. The player reads the navigation data and the CEL locator from the extended DVD-Audio disk, and operates by following the read navigation data. If the original audio content or image content is referred to from the navigation data, the player refers to the CEL locator to obtain information about the location in which the content is stored, and plays back the content. The player reads the background image from the DVD-Audio region on the disk and the button images from the SDAF data, and combines them to display the menu screen.

As such, with the use of the extended DVD-Audio disk, the existing DVD-Audio player can carry out conventional playback, while the SDAF-compliant DVD-Audio player can display the menu screen by using the navigation data described with SDAF.

In the above description, the SDAF package and CEL redirector are stored in the disk. Alternatively, such data may be downloaded through a network to the player. This method can be applied to CDS and DVD disks that have already been sold to the user. Furthermore, with this method, the CELs that are accessible through a communication network can be referred to by using the URL.

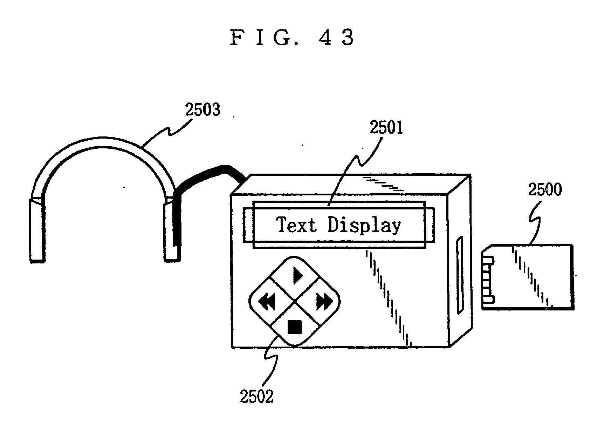

Next, a data conversion apparatus for copying multimedia contents specified in SDAF to an external storage medium for portable music players is described. Here, the portable music player is structured by using semiconductor memory as an external storage medium, and characterized by its small size, light weight, and capability of writing data therein at high speed. The portable music player includes, as shown in FIG. 43, a liquid crystal display 2501 capable of displaying text, a control panel 2502 for controlling audio playback, and a headphone 2503 for audio output. Furthermore, a memory card 2500 for storing audio data can be removably attached to the portable music player. The portable music player plays back audio contents complying with MPEG2-AAC, and also displays text information. However, the data recording format of the memory card is not SDAF, but a unique format.

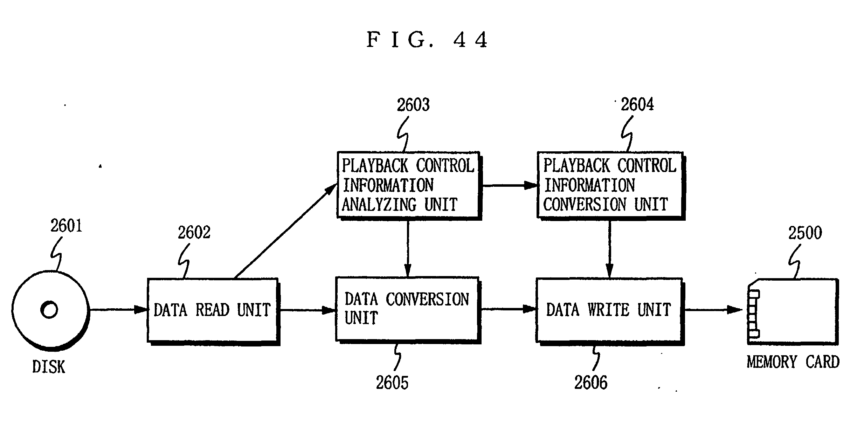

FIG. 44 is a block diagram showing the structure of the data conversion apparatus for converting contents recorded on an extended DVD-Audio disk into a predetermined format, and writing the converted contents in a memory card for portable music players. In FIG. 44, it is assumed that an LPCM-format audio content, an image content in MPEG-I frame format, playback control information described with SDAF, and additional text information are recorded in a disk 2601.

In the data conversion apparatus shown in FIG. 44, a data read unit 2602 reads the playback control information from the disk 2601, and provides the same to a playback control information analyzing unit 2603. The playback control information analyzing unit 2603 analyzes the read playback control information to examine whether the content recorded on the disk 2601 can be played back or requires conversion.

Next, the data read unit 2602 sequentially reads, from the disk 2601, contents that can be played back by the portable music player, and provides the read contents to a data conversion unit 2605. At this time, contents that cannot be played back by the portable music player is not read. The data conversion unit 2605 converts the read contents according to the type of a memory card 2500. For example, text information that can be directly played back by the portable music player such as titles is not converted. On the other hand, LPCM-format audio contents are converted into MPEG2-AAC format so that the portable music player can play back the contents.

The playback control information conversion unit 2604 generates playback control information for the portable music player based on the playback control information analyzed by the playback control information analyzing unit 2603. A data write unit 2606 writes the playback control information generated by the playback control information conversion unit 2604 and the contents converted by the data conversion unit 2605 in the memory card 2500.

Note that, the data conversion unit shown in FIG. 44 may convert arbitrary contents other than audio contents into a predetermined format and write the converted contents in the memory card 2500. Furthermore, the data recording format of the memory card may be an arbitrary format other than SDAF. Still further, for supporting a plurality of external storage media, the data conversion apparatus may include the data conversion unit, playback control information conversion unit, and data write unit for each external storage medium.

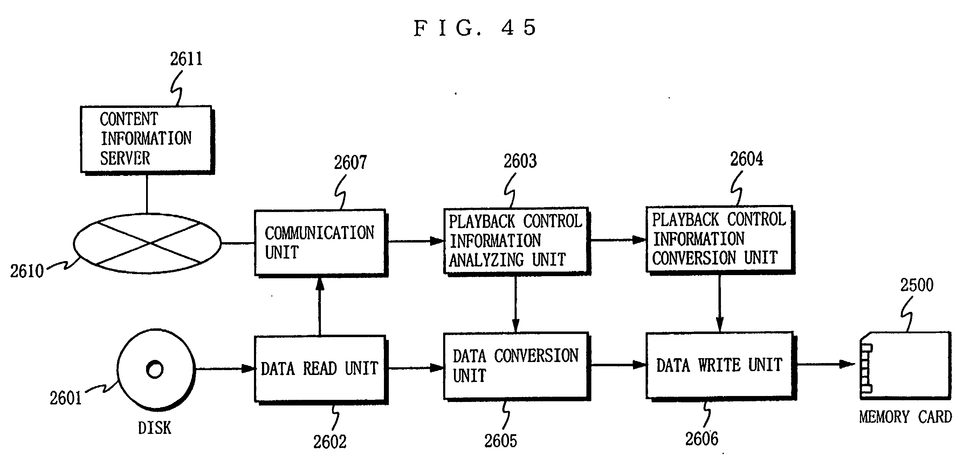

Moreover, if no navigation data described with SDAF is recorded on the disk 2601, as shown in FIG. 45, lacking data may be obtained through a communication network. In FIG. 45, it is assumed that an identification number is recorded in the disk 2601. For example, the identification number of a music CD is a catalog code, ISRC code, and others.

The data read unit 2602 reads the identification number of the disk, and provides the same to a communication unit 2607. The communication unit 2607 communicates with a content information server 2611 through a communication network 2610. The communication unit 2607 may access to the content information server 2611 through the Internet, or may directly access the content information server 2611 through a telephone circuit. The content information server 2611 stores the lacking data in relation to the identification number, and in response to a request from a data conversion apparatus, sends the lacking data to the data conversion apparatus. After receiving the lacking data, the data conversion apparatus carries out the same operation as the data conversion apparatus as shown in FIG. 44.

As stated above, the content distribution format SDAF according to the present embodiment is a format for describing multimedia contents, and mainly used for music data distribution. Also, using the SDAF in combination with the existing music data can extend the function of the existing music data.

Note that, as known from the comparison between FIGS. 3 and 18, the correlation between the music data described in the first to third embodiments and the SDAF according to the present embodiment is as follows. That is, the header 40 shown in FIG. 3 corresponds to the header 2011 shown in FIG. 18. The navigation information 41 shown in FIG. 3 corresponds to the navigation data 2012 shown in FIG. 18. The content 42 shown in FIG. 3 corresponds to the CEL 2013 shown in FIG. 18. The billing information 43 shown in FIG. 3 corresponds to the offer 2014 shown in FIG. 18.

While the invention has been described in detail, the foregoing description is in all aspects illustrative and not restrictive. It is understood that numerous other modifications and variations can be devised without departing from the scope of the invention as claimed.

## Claims

1. A data processing apparatus (1, 2, 3) executing a process on copyrighted data within a right obtained, comprising:
data receiving means (11) adapted to receive distribution-format data including at least content data (42) for protection and billing information (43) defining a billing condition on said content data (42);
right purchasing means (12, 13) adapted to process payment based on said billing information (43), and obtain a process right (52) required for the process on said content data (42);
right information storage means (16) adapted to store said process right (52) obtained by said right purchasing means (12, 13);
data conversion means (14, 22) adapted to convert the distribution-format data including the content data (42) into internal-format data without said billing information (43) when said process right (52) is obtained for said content data (42);
data storage means (15) adapted to store said internal-format data obtained by said data conversion means (14, 22); and
process execution means (17, 18, 19) adapted to execute the process on said internal-format data stored in said data storage means (15) within said process right (52) stored in said right information storage means (16).

2. The data processing apparatus according to claim 1, wherein
said content data (42) is encrypted,
said billing information (43) includes a decryption key (54) for decrypting encryption of said content data (42),
said data conversion means (14, 22) extracts said decryption key (54) from said billing information (43),
said right information storage means (16) stores said extracted decryption key (54),
said process execution means (17, 18, 19) decrypts the encryption of said content data (42) using said decryption key (54) stored in said right information storage means (16).

3. The data processing apparatus according to claim 1, wherein
said distribution-format data includes said content data (42), said billing information (43), a header (40), and process execution control information (41) to control process execution for said content data (42).

4. The data processing apparatus according to claim 1, wherein
said internal-format data is equal to data obtained by separating said billing information (43) from said distribution-format data.

5. The data processing apparatus according to claim 1, wherein
said process execution means (17, 18, 19) comprises data copy means (19) adapted to copy said internal-format data stored in said data storage means (15) to a removable storage medium (7), and
said data conversion means (22) converts said distribution-format data into said internal-format data based on a type of said storage medium (7).

6. The data processing apparatus according to claim 5, further comprising
storage medium detection means (23) adapted to detect the type (35) of said storage medium (7), wherein
said data conversion means (22) converts said distribution-format data into said internal-format data based on the type (35) of said storage medium (7) detected by said storage medium detection means (23).

7. The data processing apparatus according to claim 5, further comprising
storage medium specifying means (24) adapted to specify the type (36) of said storage medium (7), wherein
said data conversion means (22) converts said distribution-format data into said internal-format data based on the type (36) of said storage medium (7) specified by said storage medium specifying means (24).

8. The data processing apparatus according to claim 5, wherein
said distribution-format data includes one or more pieces of said content data (42), and
said internal-format data includes only content data to be copied to said storage medium (7) among the one or more pieces of said content data (42).

9. A data processing method of executing a process on copyrighted data within a right obtained, comprising:
a data receiving step of receiving distribution-format data including at least content data for protection and billing information defining a billing condition on said content data;
a right purchasing step of processing purchasing based on said billing information and obtaining a process right required for the process on said content data;
a right information storing step of storing said process right obtained in said right purchasing step;
a data converting step of converting the distribution-format data including the content data into internal-format data without said billing information when said process right is obtained for said content data;
a data storing step of storing said internal-format data obtained in said data converting step; and
a process executing step of executing the process on said internal-format data stored in said data storing step within said process right stored in said right information storing step.

10. A recording medium with a program recorded therein, said program of executing, on a computer, a data processing method of processing copyrighted data within a right obtained, said method comprising:
a data receiving step of receiving distribution-format data including at least content data for protection and billing information defining a billing condition on said content data;
a right purchasing step of processing purchasing based on said billing information and obtaining a process right required for the process on said content data;
a right information storing step of storing said process right obtained in said right purchasing step;
a data converting step of converting the distribution-format data including the content data into internal-format data without said billing information when said process right is obtained for said content data;
a data storing step of storing said internal-format data obtained in said data converting step; and
a process executing step of executing the process on said internal-format data stored in said data storing step within said process right stored in said right information storing step.

## Patentansprüche

1. Datenverarbeitungsvorrichtung (1, 2, 3), welche eine Verarbeitung auf urheberrechtlich geschützten Daten innerhalb eines erhaltenen Rechts ausführt, umfassend
Datenempfangsmittel (11), die angepasst sind, Daten in Distributionsformat zu empfangen, welche wenigstens enthalten Inhaltsdaten (42) zum Schutz und Abrechnungsinformation (43), welche eine Abrechnungsbedingung auf den Inhaltsdaten (42) definieren;
Rechteerwerbsmittel (12, 13), welche angepasst sind, Zahlung, basierend auf der Abrechnungsinformation (43), zu verarbeiten, und ein für die Verarbeitung auf den Inhaltsdaten (42) benötigtes Verarbeitungsrecht (52) zu erhalten;
Rechteinformationsspeichermittel (16), welche angepasst sind, das Verarbeitungsrecht (52), welches durch die Rechteerwerbsmittel (12, 13) erhalten wurde, zu speichern;
Datenkonversionsmittel (14, 22), angepasst, die Daten in Distributionsformat, welche die Inhaltsdaten (42) beinhalten, in Daten in internem Format ohne die Abrechnungsinformation (43) zu konvertieren, wenn das Verarbeitungsrecht (52) für die Inhaltsdaten (42) erhalten wurde;
Datenspeichermittel (15), angepasst, die Daten in internem Format, welche durch die Datenkonversionsmittel (14, 22) erhalten wurden, zu speichern; und
Verarbeitungsausführungsmittel (17, 18, 19), welche angepasst sind, die Verarbeitung auf die Daten in internem Format auszuführen, welche in den Datenspeichermitteln (15) gespeichert sind, innerhalb des Verarbeitungsrechts (52), welches in den Rechteinformationsspeichermitteln (16) gespeichert ist.

2. Datenverarbeitungsvorrichtung gemäß Anspruch 1, worin
die Inhaltsdaten (42) verschlüsselt sind,
die Abrechnungsinformation (43) einen Entschlüsselungsschlüssel (54) zum Entschlüsseln der Verschlüsselung der Inhaltsdaten (42) beinhaltet,
das Datenkonversionsmittel (14, 22) den Entschlüsselungsschlüssel (54) von der Abrechnungsinformation (42) extrahiert,
das Rechteinformationsspeichermittel (16) den extrahierten Entschlüsselungsschlüssel (54) speichert,
das Verarbeitungsausführungsmittel (17, 18, 19) die Verschlüsselung der Inhaltsdaten (42) unter Verwendung des Entschlüsselungsschlüssels (54), welcher in dem Informationsspeicherrnittel (16) gespeichert ist, entschlüsselt.

3. Datenverarbeitungsvorrichtung gemäß Anspruch 1, worin
die Daten in Distributionsformat die Inhaltsdaten (42), die Abrechnungsinformation (43), einen Header (40) und Verarbeitungsausführungssteuerinformation (41) zum Steuern der Verarbeitungsausführung für die Inhaltsdaten (42) beinhaltet.

4. Datenverarbeitungsvorrichtung gemäß Anspruch 1, worin
die Daten in internem Format gleich sind zu Daten, welche erhalten werden durch Separieren der Abrechnungsinformation (43) von den Daten in Distributionsformat.

5. Datenverarbeitungsvorrichtung gemäß Anspruch 1, worin
die Verarbeitungsausführungsmittel (17, 18, 19) Datenkopiermittel (19) umfassen, welche angepasst sind, die Daten in internem Format, welche in dem Datenspeichermittel (15) gespeichert sind, auf ein entfernbares Speichermedium (7) zu kopieren, und
das Datenkonversionsmittel (22) die Daten in Distributionsformat in die Daten von internem Format basierend auf einem Typ des Speichermediums (7) konvertiert.

6. Datenverarbeitungsvorrichtung gemäß Anspruch 5, weiterhin umfassend:
Speichermittelerkennungsmittel (23), welche angepasst sind, den Typ (35) des Speichermittels (7) zu erkennen, worin
das Datenkonversionsmittel (22) die Daten in Distributionsformat in die Daten in internem Format konvertiert, basierend auf dem Typ (35) des Speichermediums (7), welches durch die Speichermittelerkennungsmittel (23) erkannt wurde.

7. Datenverarbeitungsvorrichtung gemäß Anspruch 5, weiterhin umfassend
Speichermittelspezifizierungsmittel (24), welche angepasst sind, den Typ (36) des Speichermediums (7) zu spezifizieren, worin
das Datenkonversionsmittel (22) die Daten in Distributionsformat konvertiert in die Daten in internem Format, basierend auf dem Typ (36) des Speichermediums (7), welches durch die Speichermediumspezifizierungsmittel (24) spezifiziert wurde.

8. Datenverarbeitungsvorrichtung gemäß Anspruch 5, worin
die Daten in Distributionsformat einen oder mehrere Teile der Inhaltsdaten (42) beinhalten, und
die Daten in internem Format nur Inhaltsdaten, welche auf das Speichermedium (7) zu kopieren sind, unter dem einen Teil oder den mehreren Teilen der Inhaltsdaten (42) beinhaltet.

9. Datenverarbeitungsverfahren des Ausführens einer Verarbeitung auf urheberrechtlich geschützten Daten innerhalb eines erhaltenen Rechts, umfassend:
einen Datenempfangsschritt des Empfangens von Daten in Distributionsformat, welche wenigstens Inhaltsdaten zum Schutz und Abrechnungsinformation beinhaltet, welche eine Abrechnungsbedingung auf die Inhaltsdaten definiert;
einen Rechteerwerbsschritt des Verarbeitens des Erwerbens basierend auf der Abrechnungsinformation und Erhalten eines Verarbeitungsrechts, welches für die Verarbeitung auf die Inhaltsdaten benötigt wird;
einen Rechteinformationsspeicherschritt des Speichems des Verarbeitungsrechts, welches in dem Rechteerwerbsschritt erhalten wurde;
einen Datenkonversionsschritt des Konvertierens der Daten in Distributionsformat, welche die Inhaltsdaten beinhalten, in Daten in internem Format ohne die Abrechnungsinformation, wenn das Verarbeitungsrecht für die Inhaltsdaten erhalten wurde;
einen Datenspeicherschritt des Speichems der Daten in internem Format, welche in dem Datenkonvertierungsschritt erhalten wurden; und
einen Verarbeitungsausführungsschritt des Ausführens der Verarbeitung auf die Daten in internem Format, welche in dem Datenspeicherschritt gespeichert wurden, innerhalb des Verarbeitungsrechts, welches in dem Rechteinformationsspeicherschritt gespeichert wurde.

10. Speichermedium mit einem darauf aufgezeichneten Programm, das Programm zum Ausführen, auf einem Computer, eines Datenverarbeitungsverfahrens des Verarbeitens urheberrechtlich geschützter Daten innerhalb eines erhaltenen Rechts, wobei das Verfahren umfasst:
einen Datenempfangsschritt des Empfangens von Daten in Distributionsformat, beinhaltend wenigstens Inhaltsdaten zum Schutz und Abrechnungsinformation, welche eine Abrechnungsbedingung definiert auf den Inhaltsdaten;
einen Rechteerwerbsschritt des Verarbeitens des Erwerbens basierend auf der Abrechnungsinformation und Erhalten eines Verarbeitungsrechts, welches für die Verarbeitung auf die Inhaltsdaten benötigt wird;
einen Rechteinfonnationsspeicherschritt des Speicherns des Verarbeitungsrechts, welches in dem Rechteerwerbsschritt erhalten wurde;
einen Datenkonvertierungsschritt des Konvertierens der Daten in Distributionsformat, welche die Inhaltsdaten beinhalten, in Daten in internem Format ohne die Abrechnungsinformation, wenn das Verarbeitungsrecht für die Inhaltsdaten erhalten wurde;
einen Datenspeicherschritt des Speichems der Daten in internem Format, welche in dem Datenkonvertierungsschritt erhalten wurden; und
einen Verarbeitungsausführungsschritt des Ausführens der Verarbeitung auf die Daten in internem Format, welche in dem Datenspeicherschritt gespeichert wurde, innerhalb des Verarbeitungsrechts, welches in dem Rechteinformationsspeicherschritt gespeichert wurde.

## Revendications

1. Appareil de traitement de données (1, 2, 3) exécutant un traitement sur des données protégées par des droits d'auteur conformément à des droits obtenus, comprenant :
un moyen de réception de données (11) adapté pour recevoir des données dans un format de distribution incluant au moins des données de contenu (42) pour la protection et les informations de facturation (43) définissant une condition de facturation sur lesdites données de contenu (42) ;
un moyen d'achat de droits (12, 13) adapté pour traiter un paiement en se basant sur lesdites informations de facturation (43) et obtenir des droits de traitement (52) nécessaires pour traiter lesdites données de contenu (42) ;
un moyen de stockage des informations sur les droits (16) adapté pour stocker lesdits droits de traitement (52) obtenus par ledit moyen d'achat de droits (12, 13) ;
un moyen de conversion de données (14, 22) adapté pour convertir les données au format de distribution incluant les données de contenu (42) en données dans un format interne sans lesdites informations de facturation (43) lorsque lesdits droits de traitement (52) sont obtenus pour lesdites données de contenu (42) ;
un moyen de stockage des données (15) adapté pour stocker lesdites données au format interne obtenues par ledit moyen de conversion de données (14, 22) ; et
un moyen d'exécution du traitement (17, 18, 19) adapté pour exécuter le traitement sur lesdites données au format interne stockées dans ledit moyen de stockage des données (15) conformément auxdits droits de traitement (52) stockés dans ledit moyen de stockage des informations sur les droits (16).

2. Appareil de traitement de données selon la revendication 1, dans lequel
lesdites données de contenu (42) sont cryptées,
lesdites informations de facturation (43) incluent une
clé de décryptage (54) pour décrypter le cryptage desdites données de contenu (42),
ledit moyen de conversion de données (14, 22) extrait ladite clé de décryptage (54) desdites informations de facturation (43),
ledit moyen de stockage des informations sur les droits (16) stocke ladite clé de décryptage (54) extraite,
ledit moyen d'exécution du traitement (17, 18, 19) décrypte le cryptage desdites données de contenu (42) en utilisant ladite clé de décryptage (54) stockée dans ledit moyen de stockage des informations sur les droits (16).

3. Appareil de traitement de données selon la revendication 1, dans lequel
lesdites données au format de distribution incluent lesdites données de contenu (42), lesdites informations de facturation (43), un en-tête (40) et des informations de commande d'exécution du traitement (41) pour commander l'exécution du traitement pour lesdites données de contenu (42).

4. Appareil de traitement de données selon la revendication 1, dans lequel
lesdites données au format interne sont égales aux données obtenues en séparant lesdites informations de facturation (43) desdites données au format de distribution.

5. Appareil de traitement de données selon la revendication 1, dans lequel
ledit moyen d'exécution du traitement (17, 18, 19) comprend un moyen de copie des données (19) adapté pour copier lesdites données au format interne stockées dans ledit moyen de stockage des données (15) sur un support de stockage amovible (7), et
ledit moyen de conversion de données (22) convertit lesdites données au format de distribution en lesdites données au format interne en se basant sur un type dudit support de stockage (7).

6. Appareil de traitement de données selon la revendication 5, comprenant de plus
un moyen de détection de support de stockage (23) adapté pour détecter le type (35) dudit support de stockage (7), dans lequel
ledit moyen de conversion de données (22) convertit lesdites données au format de distribution en lesdites données au format interne en se basant sur le type (35) dudit support de stockage (7) détecté par ledit moyen de détection de support de stockage (23).

7. Appareil de traitement de données selon la revendication 5, comprenant de plus
un moyen de spécification de support de stockage (24) adapté pour spécifier le type (36) dudit support de stockage (7), dans lequel
ledit moyen de conversion de données (22) convertit lesdites données au format de distribution en lesdites données au format interne en se basant sur le type (36) dudit support de stockage (7) spécifié par ledit moyen de spécification de support de stockage (24).

8. Appareil de traitement de données selon la revendication 5, dans lequel
lesdites données au format de distribution incluent une ou plusieurs desdites données de contenu (42), et
lesdites données au format interne incluent seulement des données de contenu à copier sur ledit support de stockage (7) parmi les une ou plusieurs desdites données de contenu (42).

9. Procédé de traitement de données exécutant un traitement sur des données protégées par des droits d'auteur conformément à des droits obtenus, comprenant :
une étape de réception de données consistant à recevoir des données dans un format de distribution incluant au moins des données de contenu pour la protection et les informations de facturation définissant une condition de facturation sur lesdites données de contenu ;
une étape d'achat de droits consistant à traiter un achat en se basant sur lesdites informations de facturation et à obtenir des droits de traitement nécessaires pour traiter lesdites données de contenu ;
une étape de stockage des informations sur les droits consistant à stocker lesdits droits de traitement obtenus dans ladite étape d'achat de droits ;
une étape de conversion de données consistant à convertir les données au format de distribution incluant les données de contenu en des données dans un format interne sans lesdites informations de facturation lorsque lesdits droits de traitement sont obtenus pour lesdites données de contenu ;
une étape de stockage des données consistant à stocker lesdites données au format interne obtenues dans ladite étape de conversion de données ; et
une étape d'exécution du traitement consistant à exécuter le traitement sur lesdites données au format interne stockées dans ladite étape de stockage des données conformément auxdits droits de traitement stockés dans ladite étape de stockage des informations sur les droits.

10. Support d'enregistrement avec un programme enregistré sur celui-ci, ledit programme consistant à exécuter, sur un ordinateur, un procédé de traitement de données pour traiter des données protégées par des droits d'auteur conformément à des droits obtenus, ledit procédé comprenant :
une étape de réception de données consistant à recevoir des données dans un format de distribution incluant au moins des données de contenu pour la protection et les informations de facturation définissant une condition de facturation sur lesdites données de contenu ;
une étape d'achat de droits consistant à traiter un achat en se basant sur lesdites informations de facturation et à obtenir des droits de traitement nécessaires pour traiter lesdites données de contenu ;
une étape de stockage des informations sur les droits consistant à stocker lesdits droits de traitement obtenus dans ladite étape d'achat de droits ;
une étape de conversion de données consistant à convertir les données au format de distribution incluant les données de contenu en des données dans un format interne sans lesdites informations de facturation lorsque lesdits droits de traitement sont obtenus pour lesdites données de contenu ;
une étape de stockage des données consistant à stocker lesdites données au format interne obtenues dans ladite étape de conversion de données ; et
une étape d'exécution du traitement consistant à exécuter le traitement sur lesdites données au format interne stockées dans ladite étape de stockage des données conformément auxdits droits de traitement stockés dans ladite étape de stockage des informations sur les droits.
